(19) Europäisches Patentamt
European Patent Office
Office européen des brevets

(11) EP 0 386 256 B1

(12) EUROPEAN PATENT SPECIFICATION

(45) Date of publication and mention of the grant of the patent:
**01.05.1996 Bulletin 1996/18**

(21) Application number: **89909046.8**

(22) Date of filing: **04.08.1989**

(51) Int Cl.[6]: **C08L 67/02**, C08K 5/52, C08K 5/42, C08K 3/10, D01F 6/92, D01F 6/62, D06M 11/38

(86) International application number:
**PCT/JP89/00802**

(87) International publication number:
**WO 90/01520 (22.02.1990 Gazette 1990/05)**

# (54) AROMATIC POLYESTER RESIN COMPOSITION AND FIBERS THEREOF

AROMATISCHE POLYESTERHARZ-ZUSAMMENSETZUNG UND FASERN DARAUS

COMPOSITION A BASE DE RESINE POLYESTER AROMATIQUE ET FIBRES CONSTITUEES D'UNE TELLE COMPOSITION

(84) Designated Contracting States:
**DE FR GB IT NL**

(30) Priority: **04.08.1988 JP 193487/88**
**11.04.1989 JP 89808/89**
**18.04.1989 JP 96453/89**
**19.04.1989 JP 97449/89**
**10.07.1989 JP 175707/89**

(43) Date of publication of application:
**12.09.1990 Bulletin 1990/37**

(73) Proprietors:
- **TEIJIN LIMITED**
**Osaka-shi Osaka 541 (JP)**
- **DAI-ICHI KOGYO SEIYAKU CO., LTD.**
**Shimogyo-ku Kyoto 600 (JP)**

(72) Inventors:
- **SUZUKI, Togi**
**Ehime 799-26 (JP)**
- **MORI, Shigeo**
**Nishigyo-ku Kyoto-shi Kyoto 615 (JP)**
- **CHUJO, Noboru**
**Kyoto 610-01 (JP)**

(74) Representative: **Hoeger, Stellrecht & Partner**
**Uhlandstrasse 14 c**
**D-70182 Stuttgart (DE)**

(56) References cited:
**JP-A- 4 941 632**
**JP-A-53 126 054**
**JP-B- 4 713 135**
**JP-A- 5 437 154**
**JP-A-63 105 172**

- **Abe Yoshinaga, Sudo Makoto (Shinpan Plastic Haigozai-Kiso to Oyo) 30 January 1984 (30. 01. 84) Taisei-Sha (Toyko) p.151 and p.158**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 386 256 B1

## Description

TECHNICAL FIELD

The present invention relates to an aromatic polyester resin composition comprising a water-insoluble polyoxyethylene type polyether and fibers thereof. More particularly, the present invention relates to an aromatic polyester composition having an extremely durable antistatic property, sweat-absorbing property, soil-releasing property and hydrophilic property, which is useful for the production of shaped articles such as a fiber, film and sheet, and to a fiber thereof.

BACKGROUND ART

An aromatic polyester resin has many excellent characteristics, and therefore, the resin is used as a material for the production of shaped articles such as a fiber, a film and a sheet. But since the aromatic polyester resin is hydrophobic, the use of the aromatic polyester resin in fields where hydrophilic characteristics such as an antistatic property, sweat-absorbing property and soil-releasing property are required is restricted.

Attempts have been made to impart hydrophilic characteristics to the aromatic polyester resins, to manifest such functions as an antistatic property, sweat-absorbing property and soil-releasing property, and many proposals have been made to this end. As one attempt to impart antistatic characteristics to a polyester fiber, a method is known which comprises incorporating a polyoxyalkylene glycol into a polyester (see, for example, Japanese Examined Patent Publication No. 39-5214). In this method, however, to impart a sufficient antistatic property to the polyester fiber, it is necessary to add a polyoxyalkylene glycol in a large amount such as 15 to 20% by weight, and therefore, the physical properties, especially thermal properties, of the resultant antistatic polyester fiber are greatly lowered and the washing fastness is poor. Accordingly, this antistatic polyester fiber cannot be put to practical use.

As the means for overcoming this defect, a method is known which comprises the steps of mixing, a polyester resin with a polyoxyalkylene glycol, a polyoxyalkylene glycol/polyamide block copolymer or a polyoxyalkylene glycol/polyester block copolymer, which is substantially incompatible with the polyester resin, and further mixing with an organic or inorganic ionic compound (see, for example, Japanese Unexamined Patent Publication No. 49-41632 Japanese Examined Patent Publication No. 44-31828, Japanese Examined Patent Publication No. 60-11944, Japanese Unexamined Patent Publication No. 53-80497 and Japanese Unexamined Patent Publication No. 60-39413). According to this method, the total amount of the antistatic agent to be used can be reduced, and therefore, an antistatic polyester, in which the reduction of the physical properties is relatively small, can be obtained. Nevertheless, the antistatic polyester fiber obtained according to this method is defective in that the chemical performance, for example, color fastness thereof, is easily lost. Furthermore, if this polyester fiber is subjected to a weight-reducing alkali treatment usually conducted for improving the touch, especially a weight-reducing treatment where the weight-reducing ratio is at least 20% by weight, which is necessary for manifestation of a silk-like touch, the antistatic property thereof is easily lost at the subsequent dyeing step usually conducted at a temperature of 120 to 135°C. Accordingly, this polyester fiber cannot be practically used in fields where an antistatic property is required.

Furthermore, there has been attempted a method in which a polyester resin composition containing a small amount (3% by weight at largest) of an antistatic agent substantially incompatible with the polyester resin, and consisting of a polyoxyalkylene glycol and a metal salt of sulfonic acid, is melt-spun into a hollow fiber, whereby the majority of the added antistatic agent is concentrated and predominantly distributed in the inside surface portion around the hollow of the hollow fiber and it is made possible to improve the touch by an weight-reducing alkali treatment (see Japanese Examined Patent Publication No. 60-56802). To impart sufficient antistatic characteristics to a polyester fiber according to this method, however, it is necessary to strictly control the fiber-forming conditions and the like and restrict the bleed-out of the antistatic agent to the inside surface portion around the hollow of the hollow fiber. This necessity results in that the fiber-producing cost is increased. Furthermore, if this polyester fiber is subjected to a weight-reducing alkali treatment and the weight of the fiber is reduced at a reduction of at least 15% by weight, the imparted antistatic characteristics of the fiber are easily lost in the subsequent dyeing operation. Moreover, this polyester fiber is defective in that, since the fiber has the hollow portion, when this polyester is dyed the color darkness or color sharpness of the resultant dyed fiber is unsatisfactory.

Separately, in a core-in-sheath type composite fiber, it has been attempted to distribute an antistatic agent at a high concentration predominantly in a core portion of the core-in-sheath type composite fiber and to render a weight-reducing alkali treatment possible (see, for example, Japanese Examined Patent Publication No. 61-6883, Japanese Unexamined Patent Publication No. 55-122020 and Japanese Unexamined Patent Publication No. 61-28016). But this fiber is a composite fiber, and thus is defective in that the fiber-producing cost is drastically increased. Moreover, the antistatic property of the resultant fiber is unsatisfactory.

Furthermore, other attempts have been made to impart hydrophilic characteristics such as antistatic property,

sweat-absorbing property and soil-releasing property by a finishing treatment, and many methods have been proposed. For example, there are known a method comprising applying a hydrophilic polymeric compound to the surface of a fiber (see, for example, Japanese Examined Patent Publication No. 53-47435), and a method comprising polymerizing a polymerizable monomer having a hydrophilic group on the surface of a fiber to form a coating (see, for example, Japanese Unexamined Patent Publication No. 53-130396). If hydrophilic fibers obtained according to these methods are repeatedly subjected to a severe washing treatment, however, the imparted effects are often lost, and if the amount of treating agent applied is increased to improve the durability of the hydrophilic characteristics, the touch of the resultant fiber becomes coarse and rigid and the color fastness becomes poor. For example, when a polyester fiber is used for a thin woven fabric useful for, for example, a dress or blouse for which a soft touch is required, the polyester fiber is frequently subjected to a weight-reducing treatment with an alkali. If the polyester fiber, which has been subjected to the weight-reducing alkali treatment, is subjected to the above-mentioned finishing treatment, a problem arises in that the durability of the resultant treatment effect becomes poor.

As apparent from the foregoing description, a solid nonhollow fiber made of an antistatic polyester resin, which is modified so that the fiber can endure a weight-reducing alkali treatment resulting in a large reduction of the weight, is not presently available. Moreover, the finishing treatment technique is limited, and therefore, development of an antistatic polyester solid fiber capable of enduring a severe weight-reducing alkali treatment causing a weight reduction of at least 20% by weight, which is necessary for improving the touch, is urgently required.

As the means for imparting a water-absorbing property (the capacity of absorbing water in the liquid state) to a polyester fiber, there have been proposed the above-mentioned method comprising forming a hydrophilic coating film on the surface of a polyester fiber, and a method comprising subjecting a polyester fiber to an electric discharge treatment, a method comprising graft-polymerizing a hydrophilic compound such as acrylic acid or methacrylic acid to a polyester fiber, and a method comprising etching the surface of a polyester fiber with a chemical. Moreover, there has been attempted a method in which a polyester fiber is rendered porous and the water-absorbing property thereof is improved by utilizing the capillary phenomenon thereof.

Many investigations have been made into methods of imparting a moisture-absorbing property (the capacity of absorbing water in the vapor state), for example, the above-mentioned method in which the polyester is copolymerized with a polyoxyalkylene glycol, but the effect of improving the moisture-absorbing property by the copolymerization with a polyoxyalkylene glycol is poor and the reduction in the heat resistance and light resistance is conspicuous, and therefore, a product that can be practically used is not obtained. A moisture-absorbing polyester fiber having a moisture absorption comparable to that of cotton, which is prepared by graft-polymerizing acrylic acid or methacrylic acid to a polyester fiber and converting the grafted component to a sodium salt thereof, has been attempted, but this type of polyester fiber is defective in that the moisture-absorbing property thereof is easily lost by washing, the reduction in the color fastness thereof is conspicuous, and the touch becomes hard. Accordingly, this type of polyester fiber cannot be put to practical use.

Moreover, there has been attempted a method in which a moisture-absorbing polyester fiber having a porous structure and exhibiting a capillary condensing action is formed by steam-drawing an undrawn fiber of a polyester resin containing a specific oxalic acid complex salt incorporated therein (see Japanese Unexamined Patent Publication No. 54-93121), but since the oxalic acid complex salt is easily soluble in water, if this polyester fiber is subjected to high-pressure dyeing or washing procedure, the moisture-absorbing property of the fiber is easily lost, and thus this type of polyester fiber cannot be put to practical use.

In view of the importance of the capillary condensation type of polyester fiber, we have heretofore made several approaches concerning moisture-absorbing polyester fibers (see Japanese Unexamined Patent Publication No. 60-155770, Japanese Unexamined Patent Publication No. 60-167969, Japanese Unexamined Patent Publication No. 61-215770 and Japanese Unexamined Patent Publication No. 61-231221). In the capillary condensation type of moisture-absorbing polyester fibers, however, since fine pore-forming agents contained in these fibers are water-soluble, a reduction of the moisture-absorbing property by a high-pressure dyeing or washing procedure cannot be avoided. Accordingly, development of the capillary condensation type of a moisture-absorbing polyester fiber having a high durability to high-pressure dyeing and laundering is urgently required.

## DISCLOSURE OF THE INVENTION

An object of the present invention is to provide a polyester resin composition that can be formed into a shaped article, such as a fiber, which shows hydrophilic characteristics such as antistatic property, sweat-absorbing property and soil-releasing property, which are highly durable against a high weight-reducing alkali treatment and a repeated severe washing treatment, and a fiber thereof.

Another object of the present invention is to provide a moisture-absorbing polyester resin composition exhibiting an excellent moisture-absorbing property in an atmosphere with a high relative humidity, this moisture-absorbing property being sufficiently durable against high-pressure dyeing or repeated washing procedures, which can be formed

into a clothing which has a superior comfort when worn and a sufficiently satisfactory practical quality, and a fiber thereof.

BEST MODE OF CARRYING OUT THE INVENTION

The inventors of the present invention made various researches into hydrophilic polyester resin compositions and fibers with a view to attaining the above-mentioned objects, and as a result, found that polyoxyethylene glycol practically used for conventional antistatic polyester fibers is inherently water-soluble and naturally soluble in an alkaline aqueous solution, and therefore, has a poor durability, and that in polyoxyethylene glycol/polyester block copolymers, polyoxyethylene glycol/polyamide block copolymers and polyoxyethylene glycol/polyester/polyamide block copolymers, the hydrophilic characteristics thereof tend to reduce with increase in the water insolubility thereof. Accordingly, the inventors of the present invention noted this tendency and tried to solve the above-mentioned problems by using a novel water-insoluble polyoxyethylene type polyether having antinomic properties, that is, a hydrophilic property and a water insolubility. Based on this idea, many compounds were synthesized and various experiments on the compounds were repeated. This was successful in providing a water-insoluble polyoxyethylene type polyether by copolymerizing ethylene oxide with a specific higher olefin oxide, and it was found that the above-mentioned problem can be eliminated by the water-insoluble polyoxyethylene type polyether. More specifically, a polyester fiber, in which a water-insoluble polyoxyethylene type polyether having both of a high hydrophil'ic property and a water insolubility is dispersed, can maintain substantially sufficient strength, fibrillation resistance, heat resistance and other physical properties even after the polyester fiber is subjected to such a high alkali weight-reducing treatment as causing a weight reduction of at least 20% by weight for improving the touch. To our surprise, this polyester fiber retains a good antistatic property even after the dyeing operation, and an excellent washing fastness is maintained. The dyed product of this hydrophilic polyester fiber has excellent color sharpness and color fastness. Furthermore, it was found that the polyester fiber of the present invention has a very high potential as an antistatic polyester fiber even in the form of regular non-hollow fiber without being formed into a hollow fiber or core-sheath conjugate fiber. Moreover, the polyester fiber of the present invention has not only an excellent antistatic property but also an excellent sweat-absorbing property (wicking property) or soil-releasing property.

Still further, it was found that the water-insoluble polyoxyethylene type polyether used in the present invention has a milder mutual action to a polyester than that of a water-soluble polyoxyethylene type polyether, and therefore, even if the content of this water-insoluble polyether is increased, the reduction of the physical properties of the polyester composition is very small.

Based on these findings, the inventors of the present invention made detailed investigations of a polyether copolymer comprising ethylene oxide and a higher olefin oxide, especially relations of the kind of the higher olefin oxide component, the composition of the obtained copolymer, the polymerization degree of the copolymer and the random or block structure of the copolymer to the water solubility of the copolymer and the characteristics of the polyester composition comprising this polyether copolymer dispersed therein. The present invention is based on the results of these investigations.

The aromatic polyester resin composition of the present invention comprises (a) 100 parts by weight of an aromatic polyester and (b) 0.2 to 30 parts by weight of a water-insoluble polyoxyethylene type polyether polymer.

The aromatic polyester resin usable for the present invention comprises, as a main component, an aromatic polyester having aromatic rings in repeating chain units of the polymer. This polymer is obtained by reacting a dicarboxylic acid component comprising a bifunctional aromatic carboxylic acid or an ester-forming derivative thereof with a diol component comprising a diol or an ester-forming derivative thereof.

As preferable examples of the bifunctional aromatic carboxylic acid, there can be mentioned terephthalic acid, isophthalic acid, orthophthalic acid, 1,5-naphthalene-dicarboxylic acid, 2,5-naphthalene-dicarboxylic acid, 2,6-naphthalene-dicarboxylic acid, 4,4'-biphenyl-dicarboxylic acid, 3,3'-biphenyldicarboxylic acid, 4,4'-diphenylether-dicarboxylic acid, 4,4'-diphenylmethane-dicarboxylic acid, 4,4'-diphenylsulfone-dicarboxylic acid, 1,2-bis(phenoxy)ethane-4,4'-dicarboxylic acid, 2,5-anthracene-dicarboxylic acid, 2,6-anthracene-dicarboxylic acid, 4,4'-p-terphenylenedicarboxylic acid, 2,5-pyridine-dicarboxylic acid, β-hydroxyethoxybenzoic acid and p-hydroxybenzoic acid. Terephthalic acid is especially preferred.

The dicarboxylic acid component may comprise at least two members selected from the above-mentioned bifunctional aromatic carboxylic acids. Note, the dicarboxylic acid component may comprise, in addition to the above-mentioned bifunctional aromatic carboxylic acid, at least one member selected from the group consisting of bifunctional aliphatic acids such as adipic acid, azelaic acid, sebacic acid and dodecanedionic acid, bifunctional alicyclic carboxylic acids such as cyclohexane-dicarboxylic acid, and 5-sodium-sulfoisophthalic acid, if the amount thereof is small.

As preferable examples of the diol compound, an aliphatic diol such as ethylene glycol, propylene glycol, butylene glyol, hexylene glycol, neopentyl glycol, 2-methyl-1,3-propane-diol, diethylene glycol and trimethylene glycol, an alicyclic diol such as 1,4-cyclohexane-dimethanol, and mixtures of two or more thereof can be used. Furthermore, a small amount of a polyoxyalkylene glycol having one or two terminals unblocked can be polymerized together with the above-mentioned diol compound.

Moreover, a polycarboxylic acid such as trimellitic acid or pyromellitic acid and a polyol such as glycerol, trimethylolpropane or pentaerythritol can be used, so far as the resultant polyester polymer molecule is substantially linear.

As preferable examples of the aromatic polyester, homopolyesters such as polyethylene terephthalate, polybutylene terephthalate, polyhexylene terephthalate, polyethylene naphthalate, polybutylene naphthalate and polyethylene-1,2-bis(phenoxy)ethane-4,4'-dicarboxylate, and copolyesters such as polyethylene isophthalate/terephthalate, polybutylene terephthalate/isophthalate and polybutylene terephthalate/decane-dicarboxylate can be used. Among them, a polyethylene terephthalate resin and a polybutylene terephthalate resin are especially preferable, because they have well-balanced mechanical properties and formability.

The aromatic polyester resin of the present invention can be synthesized by a conventional process. For example, the preparation of a polyethylene terephthalate resin will now be described. This polymer can be easily prepared through a first stage reaction for producing a glycol ester of terephthalic acid and/or an oligomer thereof by directly esterifying terephthalic acid with ethylene glycol, carrying out an ester-exchange reaction of a lower alkyl ester of terephthalic acid such as dimethyl terephthalate with ethylene glycol, or reacting terephthalic acid with ethylene oxide, and a second stage reaction for polycondensing the above-mentioned product by heating under a reduced pressure until a desired degree of polymerization is attained.

In the composition of the present invention, a water-insoluble polyoxyethylene type polyether polymer is incorporated into the above-mentioned aromatic polyester resin. In the present invention, the water insolubility of the polyoxyethylene type polyether polymer refers to such a property that when 5 g of a sample is added into 100 g of pure water, and the mixture is stirred at 100°C for 60 minutes, naturally cooled to room temperature and then naturally filtered through a filter paper sheet of type 5A, JIS, at least 90% by weight of the sample is separated by the filtration.

Polyoxyethylene type polyethers satisfying the above-mentioned condition of the water insolubility and represented by the general formula (I) can be used as the water-insoluble polyoxyethylene type polyether for the present invention:

$$Z\{(CH_2CH_2O)_{\ell}(R^1O)_m\text{-}R^2]_k \qquad (I)$$

In the above-mentioned formula, Z represents a residue of an organic compound having 1 to 6 active hydrogen atoms. For example, there can be included residues of hydroxyl group-containing compounds such as methanol, ethanol, propanol, butanol, phenol, ethylene glycol, bisphenol A, propylene glycol, butylene glycol, butanediol, glycerol, trimethylolpropane, triethanolamine, diglycerol, pentaerythritol and sorbitol, and residues of primary and secondary amine compounds such as ethylenediamine, hexamethylenediamine and diethylenetriamine. A residue of a hydroxyl group-containing compound is preferable. In the formula (I), $R^1$ represents an alkylene group or substituted alkylene group having at least 6 carbon atoms. The substituted alkylene group having 6 to 50 carbon atoms is especially preferable for $R^1$. As preferable specific examples of $R^1$, there can be mentioned a cyclohexyl group, a phenylethylene group, a hexylethylene group, a methylpentylethylene group, a heptylethylene group, a methylhexylethylene group, and alkylethylene groups each having 12 to 40 carbon atoms. $R^1$ may be a mixture of two or more of the above-mentioned groups. In the formula (I), $R^2$ represents a hydrogen atom, a monovalent hydrocarbon group having 1 to 40 carbon atoms, a monovalent hydroxyl hydrocarbon group having 2 to 40 carbon atoms or a monovalent acyl group having 2 to 40 carbon atoms. As the hydrocarbon group, an alkyl group, an alkenyl group, a cycloalkyl group, an aryl group, an alkylaryl group or a hydroxyalkyl group is preferable. An alkenoyl group, a cycloalkylcarbonyl group, an arylcarbonyl group and an alkylarylcarbonyl group are preferable as the acyl group. In the formula (I), k corresponds to the number of the active hydrogen atoms possessed by the organic compound providing the residue Z and is an integer of from 1 to 6, and $\ell$ must be an integer satisfying the relationship: $\ell \geqq 70/k$, and may be the same or different among the molecules or in the molecule. In case of $\ell < 70/k$, in the finally obtained shaped article of the polyester resin composition, properties attributed to the hydrophilic characteristics, such as the alkali durability of the antistatic property, are insufficient. If the value $\ell$ exceeds 2000/k, however, no further improvement of the hydrophilic property and the durability thereof is attained in the obtained composition, but the water insolubilization of the polyoxyethylene type polyether polymer tends to be difficult. Accordingly, preferably $\ell$ is an integer not exceeding 2000/k, and most preferably 1 is in the range of from 100/k to 500/k. In the above-mentioned formula (I), m is an integer of at least 1 and is preferably in the range of $1 \leqq m \leqq 0.3\ell$, and may be the same or different among the molecules or in the molecule [with the proviso that, where k is from 2 to 6, in the number (k-1) or less of branched chains among the number k of branched chains bonded to the group Z, m can be 0]. If all of m's are 0, the resultant polyether polymer is water-soluble and the intended effects of the present invention cannot be attained. In contrast, if m exceeds 0.31, the hydrophobic property of the resultant polyether polymer is too high and the hydrophilic property of the finally resultant shaped article of the polyester composition tends to be too low, and good results cannot be obtained. It is especially preferred that m is an integer satisfying the relationship: $1 \leqq m \leqq 0.2\ell$.

Arrangement sequences of $CH_2CH_2O$ units and $R^1O$ units contained in the polyoxyethylene type polyether polymer usable for the present invention are not particularly critical. The respective units may be randomly arranged, or they may be arranged in predetermined sequences to form blocks. Preferably, however, $R^1O$ units are present singly or in

the form of blocks at the terminals of the water-insoluble polyoxyethylene type polyether molecule chain. In this case, even by an introduction of a small amount of $R^1O$ units, the degree of the water insolubilization of the water-insoluble polyoxyethylene type polyether can be increased, and furthermore, the hydrophilic characteristics can be enhanced.

In the water insoluble polyoxyethylene type polyether polymer usable for the present invention, oxyalkylene units having 3 to 5 carbon atoms can be copolymerized with the main chain represented by the formula (I), so far as the resultant polymer has an appropriate hydrophilic property and water insolubility. Effects of lowering the melting point of the water-insoluble polyoxyethylene type polyether and reducing the melt viscosity thereof can be attained by the introduction of such oxyalkylene units. Accordingly, handling of the water-insoluble polyoxyethylene type polyether can be facilitated. As the oxyalkylene group having 3 to 5 carbon atoms, there can be mentioned an oxypropylene group, an oxytetramethylene group, an oxyethylethylene group and an oxypropylethylene group. Of course, at least two kinds of these oxyalkylene units can be copolymerized to the main chain represented by the formula (I).

The above-mentioned water-insoluble polyoxyethylene type polyether can be synthesized by reacting a compound having 1 to 6 active hydrogen atoms with ethylene oxide, at least one olefin oxide having at least 6 carbon atoms and, according to need, at least one alkylene oxide having 3 to 5 carbon atoms. Nonene oxide, cyclohexene oxide and α-olefin oxides having 12 to 40 carbon atoms are preferably used as the olefin oxide.

Preferable examples of the water-insoluble polyoxyethylene type polyether are shown in Table 1.

Table 1

| Polyether No. | Active Hydrogen-Containing Compound Z | Polymerization Degrees of Ethylene Oxide (EO) and Propylene Oxide (PO), $\ell$ and n | Type of Olefin Oxide ($R^1O$) | Polymerization Degree of Olefin Oxide ($R^1O$) | Type of $R^2$ | Remarks |
|---|---|---|---|---|---|---|
| 1 | n-butanol (k=1) | EO, $\ell$=200 | nonene oxide | 20 | H | random copolymer |
| 2 | phenol (k=1) | EO, $\ell$=100 | α-olefin oxide having 12 to 14 carbon atoms | 10 | H | block copolymer having terminals of $(R^1O)_m$ blocks |
| 3 | ethylene glycol (k=2) | EO, $\ell$=40 | α-olefin oxide having 20 to 30 carbon atoms | 1 | H | terminals of $R^1O$ units |
| 4 | glycerol (k=3) | EO, $\ell$=40 | α-olefin oxide having 16 to 18 carbon atoms | 2 | H | terminals of $(R^1O)_m$ blocks |
| 5 | pentaerythritol (k=6) | EO, $\ell$=40 | α-olefin oxide having 12 to 14 carbon atoms | 5 | H | block copolymers having terminals of $(R^1O)_m$ blocks |
| 6 | sorbitol (k=4) | EO, $\ell$=70 | α-olefin oxide having 20 to 30 carbon atoms | 8 | H | ditto |
| 7 | bisphenol A (k=2) | EO, $\ell$=80 | cyclohexene oxide | 1 | H | terminals of $R^1O$ units |

Table 1 (Continued)

| Polyether No. | Active Hydrogen-Containing Compound Z | Polymerization Degrees of Ethylene Oxide (EO) and Propylene Oxide (PO), $\ell$ and n | Type of Olefin Oxide ($R^1O$) | Polymerization Degree of Olefin Oxide ($R^1O$) | Type of $R^2$ | Remarks |
|---|---|---|---|---|---|---|
| 8 | ethylene glycol (k=2) | EO, $\ell$=170 | α-olefin oxide having 20 to 30 carbon atoms | 5 | H | block copolymer having terminals of $(R^1O)_m$ blocks |
| 9 | ditto | EO, $\ell$=90 | α-olefin oxide having 16 to 18 carbon atoms | 10 | H | ditto |
| 10 | ditto | EO, $\ell$=80, PO, n=20 (random copolymerization) | ditto | 10 | H | ditto |

Note

* ... As preferable examples of group $R^2$ other than the hydrogen atom (H), there can be mentioned $-CH_3$ , $-C_6H_5$ , $-C_6H_4CH_3$ , $-C_{12}H_{25}$ , $-C_{18}H_{37}$ , $-C_{18}H_{35}$ ,

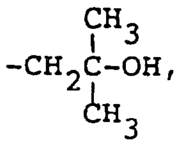, $C_{11}H_{23}CO-$, $C_{17}H_{33}CO-$ and $C_{17}H_{35}CO-$.

The above-mentioned water-insoluble polyoxyethylene type polyether can be used alone or in the form of a mixture of two or more thereof.

The water-insoluble polyoxyethylene type polyether polymer is incorporated in an amount of 0.2 to 30 parts by weight per 100 parts by weight of the aromatic polyester resin. If the incorporated amount of the water-insoluble polyoxyethylene type polyether is smaller than 0.2 part by weight, the hydrophilic property of the obtained shaped article is too low, and a satisfactory antistatic property, sweat-absorbing property and stain resistance thereof cannot be manifested. Even if the incorporated amount of the water-insoluble polyoxyethylene type polyether is increased to above 30 parts by weight, no further improvement in the antistatic property, sweat-absorbing property and stain resistance can be attained, but the mechanical properties, heat resistance and light resistance thereof become poor.

Where the composition of the present invention is melt-spun into a fiber, preferably the water-insoluble polyoxyethylene type polyether content in the fiber is 0.2 to 10% by weight. If the water-insoluble polyoxyethylene type polyether content is thus adjusted, yarn breakage at the spinning step or winding of individual filaments around roller due to breaking of individual filaments at the drawing step can be restricted. Most preferably, the water-insoluble polyoxyethylene type polyether content is 0.2 to 7.0% by weight.

In the composition of the present invention, the amount of the antimony compound contained as the polycondensation catalyst residue in the aromatic polyester resin is preferably adjusted to 30 ppm or less in terms of antimony atom. If the residual amount of the antimony compound is thus limited, thermal decomposition of the water-insoluble polyoxyethylene type polyether due to a high temperature, a low extrusion rate and a long residence time at the step of melt-shaping the composition can be restricted, and reduction in the water solubilization or the alkali durability of the water-insoluble polyoxyethylene type polyether can be prevented.

In general, an antimony compound such as antimony trioxide is widely used as the polycondensation catalyst in the process of the synthesis of an aromatic polyester. The amount of the antimony compound to be used is generally 200 to 600 ppm in terms of antimony atom, based on the weight of the aromatic polyester resin. The antimony compound added in such an amount promotes the thermal decomposition of the water-insoluble polyoxyethylene type polyether . To substantially prevent the thermal decomposition of the water-insoluble polyoxyethylene type polyether, preferably the content of the antimony compound in terms of antimony atom is 30 ppm or less, especially 10 ppm or less. The antimony compound referred to herein includes all of organic and inorganic compounds containing antimony. In general, antimony oxides such as antimony trioxide, antimony tetraoxide and antimony pentaoxide are used. The degree of action of promoting the thermal decomposition of the water-insoluble polyoxyethylene type polyether by the antimony oxide is larger than that of other antimony compound such as antimony acetate, and thus the antimony oxide is especially critical.

The aromatic polyester resin having the antimony compound content controlled to 30 ppm or less can be synthesized by using a known polycondensation catalyst other than the antimony compound as the main component of the polycondensation catalyst for the synthesis of an aromatic polyester. A titanium compound and a germanium compound are especially preferable as this polycondensation catalyst. As preferable examples of the titanium compound, there can be mentioned titanium alkoxides such as titanium isopropoxide, titanium propoxide and titanium butoxide, aliphatic carboxylic acid salts of titanium such as titanium oxalate and titanium acetate, reaction products obtained by reacting titanium alkoxides with aromatic polyvalent carboxylic acids such as phthalic acid, trimellitic acid, hemimellitic acid and pyromellitic acid or anhydrides thereof, and reaction products obtained by reacting organic acid salts of titanium such as titanium oxalate with alkali metals or alkaline earth metals. As preferable examples of the germanium compound, there can be mentioned oxides of germanium such as germanium oxide; alkoxides of germanium such as germanium butoxide; germanium glycolate, germanium chloride, germanium acetate, germanium hydroxide and sodium and potassium salts of germanium.

Preferably, the composition of the present invention further comprises 0.02 to 3 parts by weight of a phosphite type antioxidant per 100 parts by weight of the aromatic polyester.

The phosphite type antioxidant contained in the composition of the present invention restrict the thermal decomposition of the water-insoluble polyoxyethylene type polyether due to a high temperature, a low extrusion rate and a long residence time at the melt-shaping step of the composition of the present invention, and the reduction in the water insolubilization and the alkali durability of the water-insoluble polyoxyethylene type polyether can be prevented.

The phosphite type antioxidants usable for the present invention are not limited to a specific type thereof as long as they exhibit an antioxidant property.

A preferable phosphite type antioxidant usable for the present invention comprises at least one member selected from triphenyl phosphite, tris(2,4-di-t-butylphenyl) phosphite, tris(mononony lphenyl) phosphite, tris(dinonylphenyl) phosphite, tris(mono- and dinonylphenyl) phosphite, diphenylmonooctyl phosphite, diphenylmonodecyl phosphite, didecylmonophenyl phosphite, trisdecyl phosphite, triisodecyl phosphite, bis[dialkyl($C_{12}$-$C_{15}$)]bisphenol A diphosphite, distearylpentaerythritol diphosphite, di(monononylphenyl)pentaerythritol diphosphite, di(tridecylphenyl)pentaerythritol diphosphite, bis(2,6-di-t-butyl-4-methylphenyl)pentaerythritol diphosphite, 4,4'-butylidene-bis(3-methyl-6-t-butylphenyl-ditridecyl phosphite), 2,4,4'-butylidene-tris(3-methyl-6-t-butylphenylditridecyl phosphite) and tetrakis(2,4-di-t-butylphenyl)-4,4'-biphenylene phosphonite.

The amount of the phosphite type antioxidant to be added is preferably 0.02 to 3 parts by weight per 100 parts by weight of the aromatic polyester resin. If the amount of the antioxidant is smaller than 0.02 part by weight, the effect of inhibiting the thermal decomposition of the water-insoluble polyoxyethylene type polyether is insufficient, and even if the amount of the antioxidant exceeds 3 parts by weight, the effect of inhibiting the thermal decomposition is saturated and no further improvement can be attained, but the mechanical properties and hue of the obtained shaped article become poor.

The polyester composition of the present invention can be added with an organic or inorganic ionic compound to improve the antistatic property thereof. As the organic ionic compound, metal salts and quaternary phosphonium salts of sulfonic acid represented by the general formulae (II) and (III):

$$RSO_3M \quad (II)$$

and

$$RSO_3PR^3R^4R^5R^6 \quad (III)$$

are preferably employed.

In the formulae (II) and (III), R represents a member selected from the group consisting of alkyl groups having 3 to 30 carbon atoms and aryl groups having 7 to 40 carbon atoms; M represents at least one member selected from the group consisting of alkali metals and alkaline earth metals, preferably from Na, K, Li, Mg or Ca, more preferably from Li, Na or K; and $R^3$, $R^4$, $R^5$ and $R^6$ respectively and independently from each other represent a member selected from the group consisting of alkyl groups and aryl groups, preferably from lower alkyl groups, phenyl group and benzyl group.

In the case where R in the formula (II) represents an alkyl group, this alkyl group may be linear or may have a branched side chain.

The metal salts and quaternary phosphonium salts of sulfonic acid represented by the formulae (II) and (III) can be used individually or in the form of a mixture of two or more thereof. Preferable examples of the compound represented by the formula (II), include sodium stearylsulfonate, sodium octylsulfonate, sodium dodecylbenzenesulfonate, a mixture of sodium alkylsulfonates having 14 carbon atoms in average, sodium dodecylbenzenesulfonates (hard type and soft type), lithium dodecylbenzenesulfonates (hard type and soft type) and magnesium dodecylbenzenesulfonates (hard type and soft type).

Also, preferable examples of the compound represented by the formula (III) include tetrabutylphosphonium alkylsulfonates having 14 carbon atoms in average, tetraphenylphosphonium alkylsulfonates having 14 carbon atoms in average, butyltriphenylphosphonium alkylsulfonates having 14 carbon atoms in average, tetrabutylphosphonium dodecylbenzenesulfonates (hard type and soft type), tetraphenylphosphonium dodecylbenzenesulfonates (hard type and soft type) and benzyltriphenylphosphonium dodecylbenzenesulfonates (hard type and soft type).

Preferable examples of the inorganic ionic compound include potassium iodide, sodium chloride, calcium chloride, sodium thiocyanate, potassium thiocyanate, lithium thiocyanate and cesium thiocyanate.

The above-mentioned organic and inorganic ionic compounds can be used individually or in the form of a mixture of two or more thereof. Preferably, the organic or inorganic ionic compound is incorporated in an amount of 0.05 to 10 parts by weight to 100 parts by-weight of the aromatic polyester resin. If the amount of the organic or inorganic ionic compound is smaller than 0.05 part by weight, the effect of improving the antistatic property of the resultant composition is poor, and if the amount of the organic or inorganic ionic compound exceeds 100 parts by weight, the mechanical properties of the resultant composition are degraded.

For the production of the composition of the present invention, the water-insoluble polyoxyethylene type polyether and, if necessary, the phosphite type antioxidant and at least one member selected from the organic and inorganic ionic compounds are incorporated into the aromatic polyester resin simultaneously or in an optional order. Namely, the resin and the respective additive components are separately melted and the resultant melts are mixed with each other

at one operation or dividedly in at least two times at an optional stage before completion of the shaping of the aromatic polyester resin, for example, a stage of before or during the polycondensation step of the aromatic polyester, a stage after the polycondensation reaction is completed and the resin is still in the state of a melt, a stage where the resin is in the particulate form, or a stage of shaping operation. Alternatively, the respective additive components are separately incorporated into the aromatic polyester resin, and the resultant mixtures are blended before the shaping operation. When the additive components are added before the middle stage of the polycondensation reaction, they may be added in the state dissolved or dispersed in a solvent such as glycol.

A conventional antioxidant and a conventional ultraviolet absorber can be incorporated into the composition of the present invention, and the incorporation of these additives is preferred. Furthermore, a flame retardant, a fluorescent whitening agent, a delustering agent, a colorant and other additives can be added according to need.

When fibers are prepared from the polyester composition of the present invention, optional yarn-forming conditions can be adopted without any limitation. For example, optional yarn-forming conditions can be adopted in the method where a melting spinning operation is carried out at a speed of 500 to 2500 m/min and the drawing and heat treatment are conducted, another method in which a melt spinning operation is carried out at a speed of 1500 to 5000 m/min and the drawing and false-twisting treatment are conducted simultaneously or in sequence, and still another method in which a melt spinning operation is carried out at a high speed exceeding 5000 m/min and the drawing step is omitted according to the intended use. Preferably, the resultant fibers or woven or knitted fabric prepared from the fibers are heat-treated at a temperature of 100°C or more. By this heat treatment, the stabilization of the structure of the fibers or fabric and the migration of the water-insoluble polyoxyethylene type polyether and optional additives incorporated thereinto contained in the composition to the vicinity of the surface is promoted. Furthermore, a relax heat treatment can be applied thereto if necessary.

The composition of the present invention also can be used for the production of a film and a sheet. In this shaping process, optional shaping conditions can be adopted without any limitation. For example, optional conditions can be adopted in the method in which a tension is applied to a formed film only in one direction to obtain an anisotropic film, the method in which a formed film is biaxially drawn simultaneously or in sequence, and the method in which a formed film is drawn in two or more steps. For the above-mentioned reasons, preferably the resultant film or sheet is heat-treated at a temperature of 100°C or more.

Furthermore, the composition of the present invention can be used in the form of a master batch. This master batch is diluted with an ordinary polyester resin not containing the water-insoluble polyoxyethylene type polyether, and the resultant mixture is melt-shaped into a final shaped article such a fiber, a film, a sheet or the like.

The composition of the present invention is useful for the production of water-absorbing or moisture-absorbing aromatic polyester fibers.

The fibers of the present invention can be either regular fibers having no hollow core or hollow fibers having one or more hollow cores. The cross-sectional profile of the fibers or the shape of the hollow core may be circular or non-circular. To promote the moisture-absorbing speed, preferably the cross-sections of the fibers have a non-circular profile having a cross-sectional deformation ratio of at least $5000/\sqrt{d}$. The cross-sectional deformation ratio ($cm^{-1}$) refers to a value obtained by dividing the length (cm) of the contour line on the cross-sectional profile of each fiber by the cross-sectional area ($cm^2$) of the fiber, and d represents the denier of the individual fiber. In case of the hollow fiber, the length of the contour line in the cross-sectional profile of the fiber is the sum of the length of the outside peripheral contour line and the length of the inside peripheral contour line of the hollow core.

Furthermore, the fiber of the present invention can be a core-in-sheath type conjugate fiber comprising a sheath composed of a composition comprising as the main components, the above-mentioned water-insoluble polyoxyethylene type polyether and aromatic polyester resin and a core composed of a polyester resin not containing the above-mentioned water-insoluble polyoxyethylene type polyether, or a core-in-sheath type conjugate fiber comprising a core composed of the above-mentioned polyester resin composition and a sheath composed of a polyester not containing the above-mentioned water-insoluble polyoxyethylene type polyether. Moreover, the fiber of the present invention can be a side-by-side type multilayer conjugate fiber comprising at least two layers including a layer composed of the above-mentioned composition and a layer composed of a polyester resin not containing the water-insoluble polyoxyethylene type polyether.

To impart a moisture-absorbing activity to the above-mentioned polyester fibers, after the drawing heat treatment or false-twisting processing is applied to the fibers according to need, or after the fibers are converted to a fabric, the fibers or fabric is subjected to a weight-reducing treatment with an aqueous solution containing an alkali or amine. The term alkali refers to a substance capable of hydrolyzing and dissolving the polyester fibers, such as sodium hydroxide, potassium hydroxide, tetramethylammonium hydroxide, sodium carbonate or potassium carbonate. Use of sodium hydroxide and potassium hydroxide as the alkali is especially preferred. An agent for promoting the alkali weight reduction, such as cetyltrimethylammonium bromide or lauryldimethylbenzylammonium chloride can be added to the aqueous solution of the alkali. The alkali weight-reducing treatment can be easily accomplished by dipping the article to be treated in the aqueous solution of the alkali or by impregnating the article to be treated with the aqueous solution

of the alkali and subjecting the impregnated article to a steam heat treatment. The concentration of the aqueous solution of the alkali depends on the type of the alkali and the treatment conditions, but preferably the concentration of the alkali is 0.01 to 40% by weight, especially 0.1 to 30% by weight. Preferably, the alkali weight-reducing treatment is carried out at a temperature of from room temperature to 160°C.

Any amine compounds having a property of decomposing polyester fibers can be used as a reactant for the weight-reducing treatment. As typical instances of the amine compound, there can be mentioned alkylamines such as monomethylamine, monoethylamine, n-propylamine, n-butylamine, i-butylamine, ethylenediamine and monoethanolamine, aromatic amines such as aniline, and hydrazines such as hydrazine hydrate. Preferably, the amine compound is used in the form of an aqueous solution or aqueous dispersion, and the concentration thereof is appropriately set according to the composition of the polyester fibers to be treated. In general, the weight-reducing treatment temperature is preferably 10 to 50°C. Since the boiling point of the amine compound is low, when a treating solution containing the amine compound is used, preferably, the treatment temperature is not so high and is generally in the range of from 20°C to 40°C. If the treatment temperature is too high, the decomposing rate of the polyester fibers is excessively high and the reproducibility of the treatment effect is often lowered.

The weight reduction ratio of the polyester fibers by the alkali or amine treatment is appropriately determined so that the desired degree of moisture absorption can be obtained, but preferably, the total weight -reduction ratio is adjusted to at least 2% by weight based on the weight of the starting fiber.

The polyester fibers of the present invention can be subjected to both of the alkali treatment and the amine treatment. In this case, it is preferable that the amine treatment be first conducted and the alkali treatment be then carried out. The reason is that in general, at the amine treatment, the amine compound diffuses and penetrates into the surface and interior portions of the fibers and the decomposition by the amine is substantially uniformly advanced even into the interior portions of the fibers, but at the alkali treatment, the decomposition by the alkali is sequentially advanced from the surfaces toward the interior portion of the fibers. Accordingly, if certain voids are formed in the surface and interior portions of the fibers by the amine treatment to increase the surface area and the alkali treatment is then applied, the weight-reducing efficiency by the alkali treatment is drastically improved and the effect of increasing the moisture absorption becomes more conspicuous.

After the weight-reducing treatment, the polyester fibers of the present invention preferably have a moisture absorption of at least 3% by weight at a temperature of 20°C and at a relative humidity of 92%. Thus, a polyester fiber material having a good comfort to wear, which is intended in the present invention, can be obtained. If the above-mentioned moisture absorption is lower than 3% by weight, an article of clothing which is very comfortable when worn cannot be obtained from the polyester fibers.

Even if a shaped article, for example, fibers, prepared from the polyester composition of the present invention are subjected to a laundry treatment and a heat treatment such as an ironing or pressing treatment repeatedly, the excellent antistatic property, sweat-absorbing property and soil-releasing property thereof can-be retained without loss. Accordingly, the composition of the present invention is a material very suitable for the production of a shaped article which is frequently subjected to a heat treatment and for which a high antistatic property, sweat-absorbing property and soil-releasing property are required.

Recently, uniforms used in various workshops, working clothes used in factories and the like, white robes used in medical institutions and food industries, other clothes, sheets, bed covers, bathrobes, night-clothes and other bedclothes used in hospitals and hotels, and tablecloths and table covers used in restaurants, banquet halls and assembly halls are called "linens" and they are often rented to users, and the ratio of linens to be rented to the total demand of linens is increasing year by year. This field is called a linen supply field and these articles are required to have the following properties. Namely, the articles are required by the users to be clean and to be comfortably used or worn. From the suppliers, the articles should allow stains of the article to be easily removed, recontamination of the article with the stains during laundry is prevented, and the properties of the articles are not degraded and a good comfort is maintained even if laundering, ironing and pressing operations are repeatedly applied. The content of the comfortableness differs according to the place where the articles are actually used, but the comfort is typically represented by the absorption of sweat during wearing (sweat-absorbing property) and the prevention of generation of static charges (antistatic property). Accordingly, articles to be used in the linen supply field are required to have properties such that stains can be easily removed, stains do not adhere to the articles again during washing, that is, the articles have a soil-releasing property, the articles have sweat-absorbing property and antistatic property in combination, and the initial characteristics can be retained even if laundering is repeated and a heat treatment such as ironing or pressing is repeated after laundering. Since the article shaped from the composition of the present invention has excellent soil-releasing property, sweat-absorbing property and antistatic property and has an excellent laundering resistance and heat resistance, this shaped article can be suitably used in the above-mentioned application field.

Generally, polyester fibers are subjected to an alkali weight-reducing treatment for improving the touch thereof. The fibers prepared from the polyester composition of the present invention are characterized in that an excellent antistatic property, sweat-absorbing property and soil-releasing property are not influenced by the alkali weight-reducing treatment and the mechanical properties of the fibrous article are hardly degraded by the alkali weight-reducing treatment. Accordingly, the touch of the article prepared by using the fibers of the present invention can be improved by the alkali weight-reducing treatment. Accordingly, the polyester fiber article of the present invention can be used not only in the field of fabrics such as inner fabrics for ladies, for example, lingerie, lining fabrics and dust-free fabrics, but also as front fabrics to be used in the field where a high antistatic property, sweat-absorbing property and soil-releasing property are required. Therefore, the polyester fiber article of the present invention is a very useful material.

The reason why an excellent durable moisture-absorbing property is manifested in a shaped article, especially fibers, obtained from the polyester composition of the present invention has not been sufficiently elucidated, but, it is considered that a number of fine pores having a capillary condensing capacity are formed in the fibers by the weight-reducing treatment with the alkali and amine aqueous solutions and the water-insoluble polyoxyethylene type polyether is predominantly distributed in the inside surface portions around the fine pores of the fibers. Accordingly, the polyester fibers of the present invention have an excellent durable moisture-absorbing property, and usual characteristic properties of polyester fibers, such as rapid-drying property and easy-care property are retained, and thus the polyester fibers of the present invention have an excellent moisture release property. Therefore, water in the gaseous state is smoothly transferred from the interior of the cloth to the outside through the moisture absorption-moisture release mechanism, and the humidity within the cloth is maintained at a low level and a very good wearing comfort can be obtained.

In the preparation of a polyester fibers from the composition of the present invention, a particular spinning operation adopted in the preparation of a conventional conjugate fiber (an antistatic agent is predominantly distributed at a high concentration in the core of a core-in-sheath type conjugate fibers to render the alkali treatment possible) or a conventional hollow fibers (an antistatic agent is predominately distributed in the vicinity of the hollow cores of a polyester hollow fibers to render the alkali treatment possible), need not be adopted. Namely, the polyester fibers of the present invention can be prepared according to a customary spinning process and is especially advantageous in that the cost is relatively low, diversification is possible (it is easy to obtain fibers having a non-circular cross sectional profile or small-denier fibers), and the color of a dyed product has an excellent deepness and sharpness.

Note, the foregoing description does not exclude the use of the composition of the present invention as a core and/or a sheath component in a core-in-sheath type conjugate fibers and the formation of a hollow fibers from the composition of the present invention. Namely, the composition of the present invention can be shaped into a core-in-sheath type conjugate fibers or hollow fibers according to need. In view of the antistatic property or its durability, the hollow fibers are preferable and are useful in some applications.

The polyester fibers of the present invention are practically satisfactory in yarn properties thereof such as the strength and fibrillation resistance, and have an enhanced antipilling property.

The polyester fibers of the present invention can be subjected to a post treatment to make the fibers hydrophilic. For this hydrophilic property-imparting post treatment, there can be adopted a method in which the polyester fibers are treated with an aqueous dispersion of a polyester-polyether block copolymer comprising terephthalic acid and/or isophthalic acid or a lower alkyl ester thereof and a polyalkylene glycol, and a method in which a hydrophilic monomer such as acrylic acid or methacrylic acid is grafted to the polyester fibers and then the grafted acid is converted to a sodium salt thereof.

## Examples

The present invention will be further described in detail with reference to the following examples. In the examples, all of "parts" and "%" are by weight. The antistatic property, water-absorbing property and soil-releasing property of the resultant fibers were determined according to the following methods.

(1) Antistatic Property

A sample was allowed to stand in an atmosphere maintained at a temperature of 20°C at a relative humidity of 65% for 24 hours or more, and the sample was set on a static honest meter. A voltage of 10 kV was applied to electrodes of the meter and the half value period (seconds) of the charge voltage of the sample was measured at a temperature of 20°C at a relative humidity of 65%.

(2) Water-Absorbing Rate (according to JIS L-1018)

A sample fabric was spread horizontally and one drop (0.04 cc) of water was dropped onto the sample from a height of 1 cm, and the time (seconds) required for complete absorption of water in the sample and disappearance of reflected light was measured.

(3) Soil-Releasing Property

(i) Staining Treatment

A pot of a Colorpet Dyeing Tester (supplied by Nippon Senshokuki) was charged with 300 ml of a staining liquid having a composition described below, and a sample of 10 cm x 13 cm inserted in a holder of the meter was dipped in the staining liquid and a stirring treatment was carried out at 50°C for 100 minutes.

Composition of Staining Liquid

| | |
|---|---|
| Artificial stain liquid (described below) | 1% by weight |
| Sodium alkylbenzene-sulfonate | 0.02% by weight |
| Sodium sulfate | 0.03% by weight |
| Sodium tripolyphosphate | 0.02% by weight |

The composition of the artificial stain liquid was as described below.

Artificial Stain Liquid

| | |
|---|---|
| Motor oil (Dia Queen Motor Oil M-2 supplied by Mitsubishi Jidosha Kogyo) | 99.335% by weight |
| Fuel oil B | 0.634% by weight |
| Carbon black | 0.031% by weight |

After the above-mentioned treatment, the sample was lightly washed in water, and interposed between filter paper pieces to remove excess staining liquid. Each of these staining, water washing and excess stain liquid-removing treatments was repeated four times. A half of the stained sample was washed under weak washing conditions for 10 minutes in warm water maintained at 40°C, which contained 2 g/ℓ of Marseille soap, by using a household laundry machine. Then, the staining property and soil-releasing property were determined according to the following methods.

(ii) Evaluation of Staining Property and Soil-Releasing Property

By using a spectrophotometer (Macbeth MS-2020 supplied by Instrumental Color System Limited), the E* value of the sample in a colorimetric system CIE was determined according to customary procedures, and the degrees of the staining property and soil-releasing property were calculated according to the equations: $\Delta E^*_A = E^*_1 - E^*_2$ and $\Delta E^*_B = E^*_1 - E^*_3$ , in which $\Delta E^*_A$ represents the degree of staining, $\Delta E^*_B$ represents the degree of soil-releasing; $E^*_1$ represents E* of the sample before the staining treatment, $E^*_2$ represents E* of the sample after the staining treatment and $E^*_3$ represents E* of the sample after the laundering treatment.

(4) Laundry - Heat Treatment

To evaluate the durability of the antistatic property, water-absorbing rate and soil-releasing property of the sample against laundry - heat treatment, the sample was subjected to the following laundering treatment and heat treatment.

(i) Laundry Treatment

A household laundry machine (National NA-680L) was charged with 300 ℓ of a solution containing 2 g/ℓ of a washing enzyme-containing detergent (Shin Koso Zabu supplied by Kao) (bath ratio = 1:30), and the sample was put into the solution and washed at 40°C for 10 minutes by an automatic swirling water stream. Then, the sample was dehydrated, washed with 30 ℓ of warm water maintained at 40°C for 5 minutes (liquor ratio: 1:30), dehydrated, subjected to water overflow washing for 10 minutes and dehydrated. The combination of these operations was designated as one cycle of the laundry treatment. The laundering treatment was repeated by required cycles.

(ii) Heat Treatment

The sample was put into a hot air drier and treated for 1 minute in an air atmosphere at a temperature of 170°C. This operation was designated as one cycle of the heat treatment. The term "repetition of laundry - heat treatment" refers to repeat a combination cycle consisting of one laundry treatment cycle and one heat treatment cycle, which is carried out necessary times.

(5) Measurement of Moisture Absorption

The moisture absorption was calculated from the absolutely dry weight of the sample and the weight of the sample in a state of equilibrium at a predetermined temperature and at a relative humidity, according to the following equation:

$$\text{Moisture absorption (\%)} = \frac{\left[\begin{array}{l}\text{(weight at predetermined}\\ \text{temperature and at relative}\\ \text{humidity)}\end{array} - \begin{array}{l}\text{(absolutely}\\ \text{dry weight)}\end{array}\right]}{\text{(absolutely dry weight)}} \times 100$$

Examples 1 through 5 and Comparative Example 1

An ester exchange reaction vessel was charged with 100 parts of dimethyl terephthalate, 60 parts of ethylene glycol, 0.06 part (0.066 mole% based on dimethyl terephthalate) of calcium acetate monohydrate and 0.009 part (0.007 mole% based on dimethyl terephthalate) of cobalt acetate tetrahydrate as the color-adjusting agent, and the resultant reaction mixture was subjected to an ester exchange reaction by elevating the temperature of the reaction mixture from 140°C to 220°C over a period of 4 hours in a nitrogen atmosphere while methanol formed in the reaction vessel was removed to the outside of the vessel by distillation. After termination of the ester exchange reaction, 0.058 part (0.080 mole% based on dimethyl terephthalate) of trimethyl phosphate as a stabilizer and 0.024 part of dimethylpolysiloxane as a defoaming agent were added to the reaction mixture. Next, 10 minutes after, 0.04 part (0.027 mole% based on dimethyl terephthalate) of antimony trioxide was added to the reaction mixture, and the temperature was elevated to 240°C simultaneously while excessive ethylene glycol was removed by distillation. Then, the reaction mixture was transferred into a polymerization reaction vessel, and a water-insoluble polyoxyethylene type polyether represented by the formula:

$$HO\!-\!\!\left(\underset{\displaystyle C_jH_{2j+1}}{CH}CH_2O\right)_{\!m}\!\left(CH_2CH_2O\right)_{\ell}\!\left(CH_2\underset{\displaystyle C_jH_{2j+1}}{CH}O\right)_{\!m}\!-H$$

wherein j is an integer of 14 through 16, $\ell$ is about 180 in average and m is about 10 in average, was added in the amount shown in Table 2 to the reaction mixture. The pressure in the reaction vessel was reduced from 760 mmHg to 1 mmHg over a period of 1 hour, and simultaneously, the temperature of the reaction mixture was elevated from 240°C to 280°C over a period of 1 hour and 30 minutes. The polymerization was further conducted for 2 hours at a polymerization temperature of 280°C under a reduced pressure of 1 mmHg or less, and at this stage, 0.4 part of Irganox 1010 (supplied by Ciba-Geigy) was added as the antioxidant to the reaction mixture under vacuum. Then, the polymerization was further continued for 30 minutes. The resultant polymer had an intrinsic viscosity in the range of from 0.645 to 0.655, and a softening point in the range of from 260 to 263°C. The polymer was formed into chips according to a customary procedures.

The resultant chips were dried according to a customary procedure and melt-spun at a temperature of 285°C by using an extruding spinning machine having a spinneret having 24 circular spinning holes having a diameter of 0.3 mm. The resultant undrawn filament yarn was supplied to a drawing and heat-treating machine having a heating roller maintained at 80°C and a plate heater maintained at 160°C and was subjected to a drawing and heat treatment at a draw ratio that causing the resultant drawn filament yarn to exhibit an ultimate elongation of 30%, whereby a 75-denier/24-filament drawn filament yarn was obtained.

A hosiery knitted fabric was prepared by using the resultant drawn filament yarn, and the fabric was scoured and preset at 180°C for 45 seconds to obtain a knitted fabric A by customary procedures. After the above-mentioned presetting treatment, the knitted fabric was treated at a boiling temperature in an aqueous solution containing 3.5% of sodium hydroxide to obtain a knitted fabric B having a weight reduction of 20%.

The knitted fabrics A and B were subjected to a hot water treatment at 130°C for 60 minutes in pure water (model of the dyeing treatment), and according to customary procedures, a final setting treatment was applied thereto at 160°C for 45 seconds.

With respect to the resultant knitted fabrics A and B, the antistatic property [half value period (seconds) of the charge voltage] the water-absorbing speed (seconds) and the soil-releasing property were determined after 0 cycle ($LH_0$) of laundry - heat treatment and 25 cycles ($LH_{25}$) of laundry - heat treatment. The results are shown in Table 2.

Examples 6 and 7

The same procedures as in Example 3 were repeated except that sodium alkylsulfonate having 8 to 20 carbon atoms and the average carbon atom number of 14 was added in an amount shown in Table 2 under vacuum together with the water-insoluble polyoxyethylene type polyether at the stage of 10 minutes after the stage at which the degree of vacuum reached 3 mmHg in the process of the reduction of the pressure for the polymerization reaction. The results are shown in Table 2.

Examples 8 and 9

The same procedures as in Examples 6 and 7 were repeated except that tetrabutylphosphonium dodecylbenzene-sulfonate was used instead of the sodium alkyl-sulfonate. The results are shown in Table 2.

Comparative Example 2

The same procedures as in Example 7 were repeated except that a water-soluble polyoxyethylene glycol having an average molecular weight of 20,000 was used instead of the water-insoluble polyoxyethylene type polyether. The results are shown in Table 2.

Example 10

The sample procedures as in Example 6 were repeated except that a water-insoluble polyoxyethylene type polyether represented by the formula:

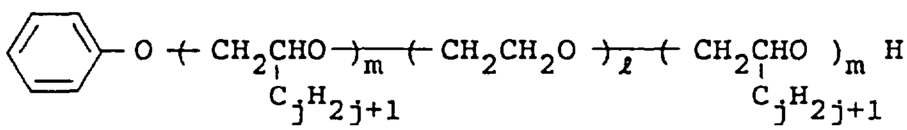

wherein j is an integer of from 10 to 12, $\ell$ is about 100 in average and m is about 10 in average,
was used instead of the water-insoluble polyoxyethylene type polyether. The results are shown in Table 2.

Example 11

The same procedures as Example 6 were repeated except that a water-insoluble polyoxyethylene type polyether represented by the formula:

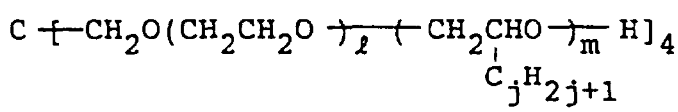

wherein j is an integer of from 10 to 12, $\ell$ is about 40 in average and m is about 5 in average, was used instead of the water-insoluble polyoxyethylene type polyether. The results are shown in Table 2.

Example 12

In a Nauta mixer (supplied by Hosokawa Micron), 1 part of the modified polyester chip prepared according to the same method as described in Example 5, and containing 30% by weight of the polyether, was mixed with 9 parts of an ordinary unmodified polyethylene terephthalate chip having an intrinsic viscosity of 0.710 for 5 minutes. The mixture was dried at 110°C for 2 hours and at 140°C for 5 hours in a nitrogen gas current, and then melt-kneaded at 280°C by a biaxial screw type extruder and extruded to provide chips.

The chips were dried, spun, draw-heat-treated, knitted, scoured, preset, alkali-treated, hot-water-treated and subjected to a laundry - heat treatment in the same manner as described in Example 1. The results of the evaluation of the antistatic property, water-absorbing speed and soil-releasing property of the resultant knitted fabric are shown in Table 2.

Example 13

The modified polyethylene terephthalate chips prepared according to the same method as described in Example 6 was melt-extruded onto a rotary cooling drum maintained at 20°C to form an undrawn film, and subsequently, the undrawn film was drawn at a draw ratio of 3.6 in the axial direction of the machine and then drawn at a draw ratio of 3.9 in the transverse direction at 105°C. The drawn film was heat-treated at 205°C to provide a biaxially oriented polyester film having a thickness of 14 μm. The surface resistivity value of the film was 2.2 x $10^{11}$ Ω/□. Little foreign substances adhered to the film, and the film was an antistatic film having an excellent water resistance.

Table 2

| Items / Example No. | Amount (% by weight) of water-insoluble Polyoxyethylene Type Polyether | Amount (% by weight) of Ionic Compound | Charge Voltage Half Value Period (seconds) | | | | Water-Absorbing Speed (seconds) | | | | Stain Resistance | | | | | | | |
|---|---|---|---|---|---|---|---|---|---|---|---|---|---|---|---|---|---|---|
| | | | Knitted fabric A | | Knitted fabric B | | Knitted fabric A | | Knitted fabric B | | Knitted fabric A | | | | Knitted fabric B | | | |
| | | | | | | | | | | | $\Delta E^*_A$ | | $\Delta E^*_B$ | | $\Delta E^*_A$ | | $\Delta E^*_B$ | |
| | | | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ |
| Comparative Example 1 | 0 | - | >180 | >180 | >180 | >180 | >240 | >240 | >240 | >240 | 80.2 | 81.6 | 57.3 | 57.5 | 75.1 | 76.4 | 55.3 | 56.1 |
| Example 1 | 0.2 | - | 71 | 85 | 55 | 58 | 48 | 50 | 10 | 12 | 76.7 | 76.4 | 19.2 | 18.7 | 75.0 | 76.7 | 16.4 | 15.5 |
| " 2 | 1.0 | - | 8 | 9 | 7 | 9 | 10 | 11 | 4 | 3 | 70.8 | 69.5 | 10.8 | 10.5 | 68.3 | 68.1 | 10.8 | 9.9 |
| " 3 | 4.0 | - | 6 | 7 | 4 | 5 | 2 | 2 | 1 | 1 | 66.5 | 65.3 | 7.6 | 7.3 | 64.4 | 64.0 | 6.4 | 6.2 |
| " 4 | 7.0 | - | 4 | 5 | 3 | 4 | 1 | 1 | 1 | 1 | 62.4 | 61.8 | 4.8 | 4.7 | 62.3 | 61.6 | 3.7 | 3.2 |
| " 5 | 30.0 | - | 2 | 2 | 3 | 3 | 1 | 1 | 1 | 1 | 60.0 | 59.2 | 4.0 | 4.0 | 58.2 | 57.3 | 3.3 | 3.0 |
| " 6 | 4.0 | 0.4 | 0.1 | 0.3 | 2 | 1 | 0.7 | 0.7 | 0.1 | 0.2 | 64.3 | 63.9 | 7.4 | 7.1 | 63.5 | 63.1 | 5.9 | 5.7 |
| " 7 | 4.0 | 2.0 | 0.1 | 0.2 | 1 | 1 | 0.4 | 0.5 | 0.1 | 0.1 | 63.9 | 63.4 | 7.2 | 7.0 | 61.8 | 61.5 | 5.4 | 5.1 |
| " 8 | 4.0 | 0.4 | 0.1 | 0.2 | 1 | 1 | 0.8 | 0.8 | 0.2 | 0.2 | 65.3 | 64.9 | 7.5 | 7.3 | 63.9 | 62.7 | 5.6 | 5.6 |
| " 9 | 4.0 | 2.0 | 0.1 | 0.2 | 0.5 | 0.5 | 0.8 | 0.7 | 0.2 | 0.3 | 64.8 | 64.2 | 7.0 | 6.9 | 62.4 | 62.3 | 5.0 | 4.9 |

Table 2 (Continued)

| Example No. \ Items | Amount (% by weight) of water-insoluble Polyoxyethylene Type Polyether | Amount (% by weight) of Ionic Compound | Charge Voltage Half Value Period (seconds) | | | | Water-Absorbing Speed (seconds) | | | | Stain Resistance | | | | | | | |
|---|---|---|---|---|---|---|---|---|---|---|---|---|---|---|---|---|---|---|
| | | | Knitted fabric A | | Knitted fabric B | | Knitted fabric A | | Knitted fabric B | | Knitted fabric A | | | | Knitted fabric B | | | |
| | | | | | | | | | | | $\Delta E^*_A$ | | $\Delta E^*_B$ | | $\Delta E^*_A$ | | $\Delta E^*_B$ | |
| | | | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ |
| Comparative Example 2 | 4.0 (PEG#20000) | 2.0 | 0.5 | 0.8 | >180 | >180 | 22 | 41 | 15 | >240 | 79.1 | 79.8 | 48.2 | 52.3 | 78.1 | 79.8 | 47.2 | 51.1 |
| Example 10 | 4.0 | 0.4 | 0.1 | 0.2 | 2 | 3 | 0.8 | 0.9 | 0.4 | 0.5 | 65.4 | 65.2 | 8.9 | 8.6 | 64.7 | 64.6 | 6.8 | 6.5 |
| " 11 | 4.0 | 0.4 | 0.1 | 0.1 | 0.5 | 0.5 | 0.6 | 0.6 | 0.1 | 0.1 | 63.2 | 62.7 | 7.0 | 6.8 | 61.0 | 60.7 | 5.5 | 5.2 |
| " 12 | 3.0 | - | 7 | 7 | 5 | 6 | 3 | 3 | 2 | 2 | 67.1 | 66.0 | 8.5 | 8.1 | 65.8 | 65.2 | 7.8 | 7.4 |

Examples 14 through 16 and Comparative Example 3

The same procedures as in Example 1, were repeated except that as a phosphite type antioxidant, tris(2,4-di-t-butylphenyl) phosphite was added in the amount shown in Table 3, together with the water-insoluble polyoxyethylene type polyether. The resultant chips had an intrinsic viscosity of 0.643 to 0.651 and a softening point of 261 to 263°C.

According to customary procedures, the chips were dried, and melted at 300°C and subjected to a high-speed spinning operation by using a spinneret having 72 circular spinning holes having a diameter of 0.15 mm, at an extrusion rate of 13.5 g/min and a take-up speed of 3800 m/min to provide a 32 denier/72 filament ultrafine filament yarn (the thickness of the individual filament was 0.44 denier).

A knitted fabric was prepared from this ultrafine filament yarn in the same manner as described in Example 1, and the antistatic property, water-absorbing speed and soil-releasing property of the resultant knitted fabric were measured. The test results are shown in Table 3.

Example 17

The same procedures as in Example 16 were repeated except that 0.4 parts of sodium alkyl-sulfonate having 8 to 20 carbon atoms and an average carbon atom number of 14 was newly added as an ionic compound under vacuum, 10 minutes after the stage at which the degree of vacuum reached 3 mmHg during the process of the reduction of the pressure for the polymerization reaction. The test results are shown in Table 3.

Example 18

The same procedures as in Example 17 were repeated except 'that tetrabutylphosphonium dodecylbenzenesulfonate was used instead of the sodium alkyl-sulfonate used as an ionic compound. The test results are shown in Table 3.

Examples 19 through 21

The same procedures as in Example 17 were repeated except that disterarylpentaerythritol diphosphite (Example 19), bis(2,6-di-t-butyl-4-methylphenyl)pentaerythritol diphosphite (Example 20) or 4,4'-butylidene-bis(3-methyl-6-t-butylphenyl-di-tridecylphosphite) (Example 21) was used instead of tris(2,4-di-t-butylphenyl) phosphite as a phosphite type antioxidant. The test results are shown in Table 3.

Table 3

| Items / Example No. | Amount (% by weight) of water-insoluble Polyoxyethylene Type Polyether/Ionic Compound | Amount (% by weight) of Phosphite Type Anti-oxidant | Charge Voltage Half Value Period (seconds) | | | | Water-Absorbing Speed (seconds) | | | | Stain Resistance | | | | | | | |
|---|---|---|---|---|---|---|---|---|---|---|---|---|---|---|---|---|---|---|
| | | | Knitted fabric A | | Knitted fabric B | | Knitted fabric A | | Knitted fabric B | | Knitted fabric A | | | | Knitted fabric B | | | |
| | | | | | | | | | | | $\Delta E^*_A$ | | $\Delta E^*_B$ | | $\Delta E^*_A$ | | $\Delta E^*_B$ | |
| | | | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ |
| Comparative Example 3 | 4.0/0 | 0 | 10 | 11 | 56 | >180 | 45 | 83 | 123 | >240 | 77.0 | 78.6 | 38.4 | 44.2 | 78.2 | 80.1 | 39.0 | 46.7 |
| Example 14 | 4.0/0 | 0.02 | 10 | 10 | 40 | 75 | 21 | 36 | 56 | 105 | 70.4 | 71.5 | 26.9 | 26.4 | 71.3 | 70.9 | 26.3 | 25.9 |
| " 15 | 4.0/0 | 0.2 | 9 | 10 | 10 | 12 | 10 | 12 | 11 | 12 | 68.1 | 67.5 | 22.3 | 21.5 | 67.3 | 66.8 | 20.5 | 20.0 |
| " 16 | 4.0/0 | 0.4 | 9 | 9 | 10 | 12 | 9 | 11 | 10 | 11 | 67.4 | 66.9 | 20.1 | 20.4 | 66.8 | 65.8 | 19.5 | 20.0 |
| " 17 | 4.0/0.4 | 0.4 | 0.2 | 0.2 | 5 | 6 | 6 | 7 | 5 | 6 | 67.2 | 66.7 | 19.7 | 18.4 | 66.4 | 66.0 | 19.1 | 18.7 |
| " 18 | 4.0/0.4 | 0.4 | 0.2 | 0.3 | 7 | 6 | 7 | 8 | 6 | 7 | 67.9 | 68.3 | 21.2 | 21.1 | 67.0 | 67.2 | 20.6 | 20.1 |
| " 19 | 4.0/0.4 | 0.4 | 0.3 | 0.3 | 6 | 7 | 7 | 8 | 7 | 7 | 68.2 | 67.7 | 22.0 | 21.9 | 67.2 | 66.5 | 21.1 | 20.6 |
| " 20 | 4.0/0.4 | 0.4 | 0.3 | 0.4 | 7 | 7 | 8 | 9 | 7 | 8 | 68.3 | 67.8 | 23.5 | 22.7 | 66.1 | 67.0 | 21.8 | 21.3 |
| " 21 | 4.0/0.4 | 0.4 | 0.4 | 0.4 | 8 | 9 | 9 | 10 | 8 | 9 | 69.0 | 68.4 | 23.9 | 23.4 | 68.2 | 68.1 | 22.5 | 22.1 |

Examples 22 through 25

In each of Examples 22 to 25 the same procedures as in Example 1 were repeated except that the antimony trioxide used as a polycondensation catalyst was replaced by 0.493 part (0.020 mole% based on dimethyl terephthalate) of titanium trimellitate in the form of an ethylene glycol solution having a concentration of 1% thereof in terms of titanium atom, and the antimony compound shown in Table 4 in the amount shown in Table 4. The resultant chips had an intrinsic viscosity of 0.640 to 0.656 and a softening point of 260 to 263°C.

According to customary procedures, the chips were dried, melted and subjected to a high-speed spinning operation by using a spinneret having 72 circular extrusion holes having a diameter of 0.15 mm, at an extrusion rate of 13.5 g/min at a take-up speed of 3800 m/min to provide a 32-denier/72-filament ultrafine filament yarn (the thickness of the individual filament was 0.44 denier).

In the same manner as described in Example 1, the filament yarns were knitted, scoured, preset, alkali-weight-reduced, finally set and subjected to a laundry - heat treatment. The results of the tests on the antistatic property, water-absorbing speed and soil-releasing property of the knitted fabric are shown in Table 4.

Example 26

The same procedures as in Example 22 were repeated except that 10 minutes after the stage at which the degree of vacuum reached 3 mmHg in the process of reduction of pressure for the polymerization reaction, 0.4 part of sodium alkylsulfonate having 8 to 20 carbon atoms and an average carbon atom number of 14 was newly added as the ionic compound under vacuum. The results are shown in Table 4.

Example 27

The same procedures as in Example 26 were repeated except that tetrabutylphosphonium dodecylbenzenesulfonate was used as an ionic compound instead of the sodium alkylsulfonate. The results are shown in Table 4.

Example 28

The same procedures as in Example 26 were repeated except that 1.539 parts (0.040 mole% based on dimethyl terephthalate) of germanium oxide in the form of a 1.4% aqueous solution was used as a polycondensation catalyst instead of titanium trimellitate. The results are shown in Table 4.

Example 29

The same procedures as in Example 26 were repeated except that 0.4 part of tris(2,4-di-t-butylphenyl) phosphite was added as a phosphite type antioxidant together with the water-insoluble polyoxyethylene type polyether. The test results are shown in Table 4.

Table 4

| Items / Example No. | Antimony Compound | | Water-insoluble Polyoxyethylene Type Polyether (% by weight) | Ionic Compound (% by weight) | Charge Voltage Half Value Period (seconds) | | | | Water-Absorbing Speed (seconds) | | | | Stain Resistance | | | | | | | |
|---|---|---|---|---|---|---|---|---|---|---|---|---|---|---|---|---|---|---|---|---|
| | | | | | Knitted fabric A | | Knitted fabric B | | Knitted fabric A | | Knitted fabric B | | Knitted fabric A | | | | Knitted fabric B | | | |
| | | | | | | | | | | | | | $\Delta E^*_A$ | | $\Delta E^*_B$ | | $\Delta E^*_A$ | | $\Delta E^*_B$ | |
| | Kind | Sb (ppm) | | | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ | $LH_0$ | $LH_{25}$ |
| Example 22 | - | 0 | 4.0 | - | 7 | 8 | 7 | 7 | 3 | 5 | 2 | 2 | 66.1 | 65.1 | 12.3 | 12.0 | 64.2 | 63.8 | 11.8 | 11.5 |
| Example 23 | $Sb_2O_3$ | 10 | 4.0 | - | 9 | 10 | 8 | 9 | 3 | 5 | 2 | 3 | 66.4 | 65.4 | 12.4 | 12.1 | 64.3 | 63.7 | 11.6 | 11.2 |
| " 24 | " | 30 | 4.0 | - | 10 | 10 | 9 | 9 | 2 | 4 | 2 | 2 | 67.3 | 66.8 | 12.8 | 12.4 | 65.1 | 64.8 | 12.0 | 11.7 |
| " 25 | Antimony acetate | 30 | 4.0 | - | 8 | 9 | 8 | 8 | 3 | 4 | 2 | 2 | 66.8 | 66.2 | 11.5 | 11.3 | 64.7 | 64.1 | 11.0 | 10.7 |
| " 26 | - | 0 | 4.0 | 0.4 | 0.2 | 0.2 | 1 | 1 | 0.5 | 0.5 | 0.2 | 0.2 | 65.1 | 64.2 | 10.1 | 9.8 | 64.8 | 63.7 | 9.6 | 9.2 |
| " 27 | - | 0 | 4.0 | 0.4 | 0.3 | 0.3 | 2 | 3 | 0.8 | 0.8 | 0.2 | 0.3 | 67.0 | 66.3 | 11.8 | 10.6 | 66.9 | 66.1 | 10.4 | 9.9 |
| " 28 | - | 0 | 4.0 | 0.4 | 0.3 | 0.3 | 2 | 2 | 0.6 | 0.8 | 0.3 | 0.4 | 66.0 | 65.7 | 10.6 | 10.1 | 65.6 | 64.2 | 9.8 | 9.4 |
| " 29 | - | 0 | 4.0 | 0.4 | 0.2 | 0.2 | 0.6 | 0.7 | 0.3 | 0.5 | ,0.1 | 0.2 | 64.6 | 63.7 | 9.6 | 8.8 | 63.7 | 62.9 | 8.9 | 8.3 |

Examples 30 through 33

In each of Examples 30 to 33, the same procedures as in Example 1 were repeated except that a water-insoluble polyoxyethylene type polyether charged in the polymerization vessel was one represented by the formula:

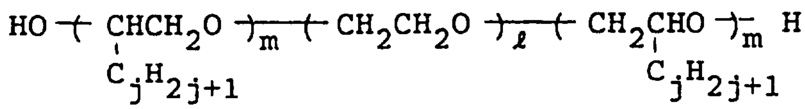

wherein j is an integer of from 18 to 28, ℓ is about 115 in average and m is about 10 in average.
This water-insoluble polyoxyethylene type polyether was used in an amount shown in Table 5.

Furthermore, 0.1 part of Cyanox 1790 (supplied by American Cyanamid) and 0.3 part of Mark AO-412S (supplied by Adeca-Argus) were used as an antioxidant. The resultant polymer had an intrinsic viscosity of 0.640 to 0.648, and a softening point of 261°C to 262°C. The test results are shown in Table 5.

Example 34

The same procedures as in Example 32 were repeated except that water-insoluble polyoxyethylene type polyether represented by the formula:

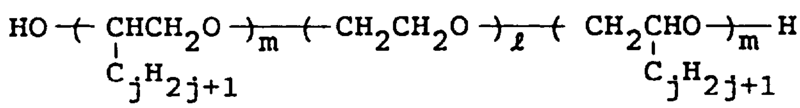

wherein j is an integer of from 10 to 12, ℓ is about 180 on average and m is about 20 on average, was used. The test results are shown in Table 5.

Example 35

The same procedures as in Example 32 were repeated except that a water-insoluble polyoxyethylene type polyether represented by the formula:

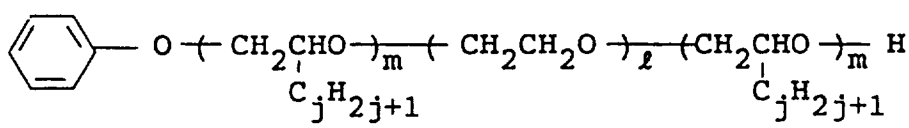

wherein j is an integer of from 12 to 14, ℓ is about 100 on average and m is about 15 on average, was used. The test results are shown in Table 5.

Example 36

The same procedures as in Example 31 were repeated except that 10 minutes after the stage at which the degree of vacuum reached 3 mmHg during the process of the reduction of the pressure for the polymerization reaction, 2 parts of sodium alkylsulfonate having 8 to 20 carbon atoms and an average carbon atom number of 14 was added under vacuum. The test results are shown in Table 5.

Example 37

The same procedures as in Example 36 were repeated except that tetrabutylphosphonium dodecylbenzenesulfonate was used as an ionic compound, instead of the sodium alkylsulfonate. The test results are shown in Table 5.

Example 38

The same procedures as in Example 37 were repeated except that a 40% aqueous solution of monoethylamine was used instead of the alkali in the weight-reducing treatment, and the weight-reducing treatment was carried out at a constant temperature of 30°C. The test results are shown in Table 5.

Example 39

The same procedures as in Example 37 were repeated except that in the weight-reducing treatment, a 40% aqueous solution of monoethylamine was used instead of the alkali, and the amine treatment was carried out at a constant temperature of 30°C to attain a weight reduction of 5%, and the sample was sufficiently washed with water and treated at a boiling temperature in a 1.0% aqueous solution of sodium hydroxide to attain a total weight reduction of 20%. The test results are shown in Table 5.

Comparative Example 4

The same procedures as in Example 37 were repeated except that a water-soluble polyoxyethylene glycol having an average molecular weight of 8,000 was used instead of the water-insoluble polyoxyethylene type polyether. The test results are shown in Table 5.

Table 5

| Items / Example No. | Amount (% by weight) of Water-Insoluble Polyoxyethylene Type Polyether | Amount (% by weight) of Ionic Compound | Moisture Absorption (20°C x 92%RH) Knitted fabric A | | Knitted fabric B | |
|---|---|---|---|---|---|---|
| | | | $L_0$ | $L_{25}$ | $L_0$ | $L_{25}$ |
| Example 30 | 2 | - | 1.3 | 1.2 | 3.2 | 3.0 |
| " 31 | 4 | - | 2.0 | 1.8 | 4.6 | 4.5 |
| " 32 | 10 | - | 3.0 | 2.7 | 6.6 | 6.4 |
| " 33 | 20 | - | 3.5 | 3.3 | 9.2 | 9.0 |
| " 34 | 10 | - | 2.9 | 2.7 | 6.2 | 6.0 |
| " 35 | 10 | - | 3.0 | 2.8 | 6.4 | 6.1 |
| " 36 | 4 | 2 | 2.2 | 1.9 | 5.4 | 5.0 |
| " 37 | 4 | 2 | 1.9 | 1.7 | 6.0 | 5.7 |
| " 38 | 4 | 2 | 1.9 | 1.7 | 8.1 | 7.7 |
| " 39 | 4 | 2 | 1.9 | 1.7 | 9.8 | 9.3 |
| Comparative Example 4 | 4 (water-soluble PEG#8000) | 2 | 1.7 | 0.9 | 2.0 | 0.8 |

## Claims

1. An aromatic polyester resin composition comprising a water-insoluble polyoxyethylene type polyether, characterized in that the composition comprises

   a) 100 parts by weight of an aromatic polyester resin and

   b) 0.2 to 30 parts by weight of said water-insoluble polyoxyethylene type polyether comprising at least one member selected from polymers represented by the formula (I):

   $$Z[(CH_2CH_2O)_\ell\text{-}(R^1O)_m\text{-}R^2]_k \qquad (I)$$

   wherein Z represents a residue of an organic compound having 1 to 6 active hydrogen atoms, $R^1$ represents an unsubstituted or substituted alkylene group having at least 6 carbon atoms, $R^2$ represents a member selected from a hydrogen atom, monovalent hydrocarbon groups having 1 to 40 carbon atoms, monovalent hydroxyl hydrocarbon groups having 2 to 40 carbon atoms and monovalent acyl groups having 2 to 40 carbon atoms, k represents an integer of from 1 to 6, $\ell$ represents an integer satisfying the relationship of $\ell \geq 70/k$, and m is an integer of 1 or more.

2. A composition as set forth in claim 1, wherein the aromatic polyester resin comprises at least one member selected from polyethylene terephthalate, polybutylene terephthalate, polyhexylene terephthalate, polyethylene naphthalate, polybutylene naphthalate, polyethylene-1,2-bis(phenoxy)ethane-4,4'-dicarboxylate, a polyethylene isophthalate/terephthalate copolymer, a polybutylene terephthalate/isophthalate copolymer and a polybutylene terephthalate/decane-dicarboxylate copolymer.

3. A composition as set forth in claim 1 or 2, wherein the aromatic polyester resin contains an antimony compound as a polycondensation catalyst residue in a controlled amount of 30 ppm or less in terms of antimony atom.

4. A composition as set forth in anyone of claims 1 to 3, wherein the organic compound residue represented by Z in the formula (I) is selected from the group consisting of a methanol residue, a propanol residue, an ethanol residue, a butanol residue, a phenol residue, an ethylene glycol residue, a propylene glycol residue, a butylene glycol residue, a butane-diol residue, a glycerol residue, a trimethylolpropane residue, a pentaerythritol residue, a sorbitol residue, a bisphenol A residue, a diglycerol residue, a triethanolamine residue, an ethylenediamine residue, a hexamethylenediamine residue and a diethylenetriamine residue.

5. A composition as set forth in any one of the claims 1 to 4, wherein $\ell$ in the formula (I) satisfies the relationship:

   $$70/k \leqq \ell \leqq 2000/k.$$

6. A composition as set forth in any one of the claims 1 to 5, wherein m in the formula (I) satisfies the relationship:

   $$1 \leqq m \leqq 0.3\,\ell.$$

7. A composition as set forth in any one of the claims 1 to 6, wherein the water-insoluble polyoxyethylene type polyether comprises a polymer having at least one oxyalkylene unit copolymerized with the polyether main chain represented by the formula (I) and having 3 to 5 carbon atoms.

8. A composition as set forth in any one of the claims 1 to 7, further comprising a phosphite type antioxidant in an amount of 0.02 to 3 parts by weight per 100 parts by weight of the aromatic polyester resin.

9. A composition as set forth in claim 8, wherein the phosphite type antioxidant comprises at least one member selected from the group consisting of triphenyl phosphite, tris(2,4-di-t-butylphenyl) phosphite, tris(monononylphenyl) phosphite, tris(dinonylphenyl) phosphite, tris(mono- and dinonylphenyl) phosphite, diphenylmonooctyl phosphite, diphenylmonodecyl phosphite, didecylmonophenyl phosphite, trisdecyl phosphite, trisisodecyl phosphite, bis[dialkyl($C_{12}$-$C_{15}$)]bisphenol A diphosphite, distearylpentaerythritol diphosphite, di(monononylphenyl)pentaerythritol diphosphite, di(tridecylphenyl)pentaerythritol diphosphite, bis(2,6-di-t-butyl-4-methylphenyl)pentaerythritol diphosphite, 4,4'-butylidene-bis(3-methyl-6-t-butylphenyl-ditridecyl phosphite), 2,4,4'-butylidene-tris(3-methyl-6-t-butylphenyl-ditridecyl phosphite and tetrakis(2,4-di-t-butylphenyl)-4,4'-biphenylene phosphonite.

10. A composition as set forth in any of claims 1 through 9, further comprising at least one member selected from the group consisting of organic and inorganic ionic compounds in an amount of 0.05 to 10 parts by weight per 100

part by weight of the aromatic polyester resin.

**11.** A composition as set forth in claim 10, wherein the organic ionic compound is selected from the group consisting of sulfonates represented by the formula (II) and (III):

$$RSO_3M \quad (II)$$

and

$$RSO_3PR^3R^4R^5R^6 \quad (III)$$

wherein R represents a member selected from the group consisting of alkyl groups having 3 to 30 carbon atoms and aryl groups having 7 to 40 carbon atoms, M represents a member selected from the group consisting of alkali metals and alkaline earth metals, and $R^3$, $R^4$, $R^5$ and $R^6$ respectively and independently from each other represent a member selected from the group consisting of alkyl groups and aryl groups.

**12.** A hydrophilic aromatic polyester fiber comprising a water-insoluble polyoxyethylene type polyether, characterized in that the fiber comprises

a) 100 parts by weight of an aromatic polyester resin and

b) 0.2 to 30 parts by weight of said water-insoluble polyoxyethylene type polyether comprising at least one member selected from the group
consisting of polymers represented by the formula (I):

$$Z[(CH_2CH_2O)_\ell\text{-}(R^1O)_m\text{-}R^2]_k \quad (I)$$

wherein Z represents a residue of an organic compound having 1 to 6 active hydrogen atoms, $R^1$ represents an unsubstituted or substituted alkylene group having at least 6 carbon atoms, $R^2$ represents a member selected from the group consisting of a hydrogen atom, monovalent hydrocarbon groups having 1 to 40 carbon atoms, monovalent hydroxyl hydrocarbon groups having 2 to 40 carbon atoms and monovalent acyl groups having 2 to 40 carbon atoms, k represents an integer of from 1 to 6, $\ell$ represents an integer satisfying the relationship: $\ell \geq 70/k$, and m represents an integer of at least 1.

**13.** A fiber obtained by subjecting a fiber as set forth in claim 12 to a weight-reducing treatment with an aqueous solution of an alkali or amine.

**14.** A fiber as set forth in claim 13, wherein the weight-reduced fiber has a moisture absorption of at least 3% by weight at a temperature of 20°C and a relative humidity of 92%.

**15.** A fiber as set forth in any of claims 12 through 14, wherein the amount of an antimony compound contained as the polycondensation catalyst residue in the aromatic polyester resin is controlled to 30 ppm or less in terms of antimony atom.

**16.** A fiber as set forth in any of claims 12 through 15, wherein a phosphite type anioxidant is further comprised in an amount of 0.02 to 3 parts by weight per 100 parts by weight of the aromatic polyester resin.

**17.** A fiber as set forth in any of claims 12 through 16, wherein at least one member selected from the group consisting of organic and inorganic ionic compounds is further comprised in an amount of 0.05 to 10 parts by weight per 100 part by weight of the aromatic polyester resin.

**18.** A fiber as set forth in claim 17, wherein the organic ionic compound is selected from the group consisting of sulfonates represented by the formula (II) and (III):

$$RSO_3M \quad (II)$$

and

$$RSO_3PR^3R^4R^5R^6 \quad (III)$$

wherein R represents a member selected from the group consisting of alkyl groups having 3 to 30 carbon atoms and aryl groups having 7 to 40 carbon atoms, M represents a member selected from the group consisting of alkali metals and alkaline earth metals, and $R^3$, $R^4$, $R^5$ and $R^6$ respectively and independently from each other represent a member selected from the group consisting of alkyl groups and aryl groups.

## Patentansprüche

1. Zusammensetzung mit einem aromatischen Polyesterharz, umfassend einen wasserunlöslichen Polyether vom Polyoxyethylen-Typ, dadurch gekennzeichnet, daß die Zusammensetzung umfaßt:

   a) 100 Gewichtsteile eines aromatischen Polyesterharzes und

   b) 0,2 bis 30 Gewichtsteile des wasserunlöslichen Polyethers vom Polyoxyethylen-Typ, welcher mindestens ein Mitglied, ausgewählt aus den durch Formel (I) repräsentierten Polymeren, umfaßt:

   $$Z[(CH_2CH_2O)_{\ell}-(R^1O)_mR^2]_k \quad (I)$$

   worin Z einen Rest einer organischen Verbindung mit 1 bis 6 aktiven Wasserstoffatomen repräsentiert, worin $R^1$ eine unsubstituierte oder substituierte Alkylengruppe mit mindestens 6 Kohlenstoffatomen repräsentiert, worin $R^2$ ein Mitglied repräsentiert, ausgewählt aus einem Wasserstoffatom, monovalenten Kohlen-Wasserstoffgruppen mit 1 bis 40 Kohlenstoffatomen, monovalenten Hydroxylkohlenwasserstoff-Gruppen mit 2 bis 40 Kohlenstoffatomen und monovalenten Acylgruppen mit 2 bis 40 Kohlenstoffatomen, worin k eine ganze Zahl von 1 bis 6 repräsentiert, worin $\ell$ eine ganze Zahl repräsentiert, welche der Beziehung $\ell \geq 70/k$ genügt, und worin m eine ganze Zahl von 1 oder mehr ist.

2. Zusammensetzung gemäß Anspruch 1, worin das aromatische Polyesterharz mindestens ein Mitglied umfaßt aus Polyethylenterephthalat, Polybutylenterephthalat, Polyhexylenterephthalat, Polyethylennaphthalat, Polybutylennaphthalat, Polyethylen-1,2-bis(phenoxy)-ethan-4,4'-dicarboxylat, ein Polyethylenisophthalat/terephthalat-Copolymer, ein Polybutylenterephthalat/isophthalat-Copolymer und ein Polybutylenterephthalat/decan-dicarboxylat-Copolymer.

3. Zusammensetzung nach Anspruch 1 oder 2, worin das aromatische Polyesterharz eine Antimonverbindung als einen Polykondensationskatalysator-Rückstand in einer definierten Menge von 30 ppm oder weniger, bezogen auf das Antimon-Atom, umfaßt.

4. Zusammensetzung nach einem der Ansprüche 1 bis 3, worin der organische Verbindungsrest, der durch Z repräsentiert wird, ausgewählt ist aus der aus einem Methanolrest, einem Propanolrest, einem Ethanolrest, einem Butanolrest, einem Phenolrest, einem Ethylenglykolrest, einem Propylenglykolrest, einem Butylenglykolrest, einem Butandiolrest, einem Glycerinrest, einem Trimethylolpropanrest, einem Pentaerythritolrest, einem Sorbitolrest, einem Bisphenol-A-Rest, einem Diglycerinrest, einem Triethanolaminrest, einem Ethylendiaminrest, einem Hexamethylendiaminrest und einem Diethylentriaminrest bestehenden Gruppe.

5. Zusammensetzung nach einem der Ansprüche 1 bis 4, worin $\ell$ in der Formel (I) der Beziehung genügt:

   $$70/k \leq \ell \leq 2000/k.$$

6. Zusammensetzung nach einem der Ansprüche 1 bis 5, worin m in der Formel (I) der Beziehung genügt:

   $$1 \leq m \leq 0{,}3\,\ell\,.$$

7. Zusammensetzung nach einem der Ansprüche 1 bis 6, worin wasserunlösliche Polyether vom Polyoxyethylentyp ein Polymer umfaßt, bei welchem mindestens eine Oxyalkyleneinheit mit der Polyetherhauptkette gemäß Formel (I) copolymerisiert ist und 3 bis 5 Kohlenstoffatome umfaßt.

8. Zusammensetzung nach einem der Ansprüche 1 bis 7, welche ferner ein Antioxidans vom Phosphit-Typ in einer Menge von 0,02 bis 3 Gewichtsteilen pro 100 Gewichtsteile des aromatischen Polyesterharzes umfaßt.

9. Zusammensetzung nach Anspruch 8, worin das Antioxidans vom Phosphit-Typ mindestens ein Mitglied umfaßt, ausgewählt aus der Gruppe, bestehend aus Triphenylphosphit, tris(2,4-Di-t-butylphenyl)-phosphit, tris(Monononylphenyl)phosphit, tris(Dinonylphenyl)-phosphit, tris(Mono- und Dinonylphenyl)-phosphit, Diphenylmonooctylphosphit, Diphenylmonodecyl-phosphit, Didecylmonophenyl-phosphit, Trisdecyl-phosphit, Trisisodecyl-phosphit, bis[Dialkyl($C_{12}$-$C_{15}$)]bisphenol-A-diphosphit, Distearylpentaerythritol-diphosphit, Di-(monononylphenyl)pentaerythritol-diphosphit, Di-(tridecylphenyl)pentaerythritol-diphosphit, Bis-(2,6-di-t-butyl-4-methylphenyl)-pentaerythritol-diphosphit, 4,4'-Butyliden-bis-(3-methyl-6-t-butylphenyl-ditridecyl-phosphit), 2,4,4'-Butyliden-tris(3-methyl-6-t-butylphenyl-ditridecylphosphit und Tetrakis(2,4-di-t-butylphenyl)-4,4'-biphenylen-phosphonit.

**10.** Zusammensetzung nach einem der Ansprüche 1 bis 9, welche ferner mindestens ein Mitglied, ausgewählt aus der aus organischen und anorganischen Verbindungen bestehenden Gruppe, in einer Menge von 0,05 bis 10 Gewichtsteilen pro 100 Gewichtsteile des aromatischen Polyesterharzes umfaßt.

**11.** Zusammensetzung nach Anspruch 10, worin die organische ionische Verbindung aus der aus Sulfonaten der Formeln (II) und (III) bestehenden Gruppe ausgewählt ist

$$RSO_3M \qquad (II)$$

und

$$RSO_3PR^3R^4R^5R^6 \qquad (III)$$

worin R ein Mitglied repräsentiert, ausgewählt aus der aus Alkylgruppen mit 3 bis 30 Kohlenstoffatomen sowie Arylgruppen mit 7 bis 40 Kohlenstoffatomen bestehenden Gruppe, worin M ein Mitglied repräsentiert, ausgewählt aus der aus Alkalimetallen und Erdalkalimetallen bestehenden Gruppe, und worin $R^3$, $R^4$, $R^5$ und $R^6$ jeweils und unabhängig voneinander ein Mitglied aus der aus Alkylgruppen und Arylgruppen bestehenden Gruppe repräsentiert.

**12.** Faser eines hydrophilen aromatischen Polyesters, umfassend einen wasserunlöslichen Polyether vom Polyoxyethylentyp, dadurch gekennzeichnet, daß die Faser umfaßt

a) 100 Gewichtsteile eines aromatischen Polyesterharzes und

b) 0,2 bis 30 Gewichtsteile des wasserunlöslichen Polyethers vom Polyoxyethylen-Typ, welcher mindestens ein Mitglied, ausgewählt aus der durch Formel (I) repräsentierten Gruppe von Polymeren, umfaßt:

$$Z[(CH_2CH_2O)_\ell\text{-}(R^1O)_m\text{-}R^2]_k \qquad (I)$$

worin Z einen Rest einer organischen Verbindung mit 1 bis 6 aktiven Wasserstoffatomen repräsentiert, worin $R^1$ eine unsubstituierte oder substituierte Alkylengruppe mit mindestens 6 Kohlenstoffatomen repräsentiert, worin $R^2$ ein Mitglied repräsentiert, ausgewählt aus der Gruppe, bestehend aus einem Wasserstoffatom, monovalenten Kohlen-Wasserstoffgruppen mit 1 bis 40 Kohlenstoffatomen, monovalenten Hydroxylkohlenwasserstoff-Gruppen mit 2 bis 40 Kohlenstoffatomen und monovalenten Acylgruppen mit 2 bis 40 Kohlenstoffatomen, worin k eine ganze Zahl von 1 bis 6 repräsentiert, worin $\ell$ eine ganze Zahl repräsentiert, welche der Beziehung $\ell \geq 70/k$ genügt, und worin m eine ganze Zahl von mindestens 1 ist.

**13.** Faser, welche durch Unterwerfen einer Faser gemäß Anspruch 12 unter eine gewichtsreduzierende Behandlung mit einer wäßrigen Lösung eines Alkali oder eines Amins erhalten wurde.

**14.** Faser nach Anspruch 13, worin die im Gewicht reduzierte Faser eine Feuchtigkeitsabsorption von mindestens 3 Gew. % bei einer Temperatur von 20° C und einer relativen Luftfeuchtigkeit von 92 % aufweist.

**15.** Faser nach einem der Ansprüche 12 bis 14, worin der Gehalt einer Antimonverbindung, welche als Polykondensationskatalysator-Rückstand enthalten ist, in dem aromatischen Polyesterharz auf 30 ppm oder weniger, bezogen auf das Antimonatom, begrenzt ist.

**16.** Faser nach einem der Ansprüche 12 bis 15, worin das Antioxidans vom Phosphit-Typ in einer Menge von 0,02 bis 3 Gewichtsteilen pro 100 Gewichtsteile aromatisches Polyesterharz enthalten ist.

**17.** Faser nach einem der Ansprüche 12 bis 16, worin mindestens ein Mitglied, ausgewählt aus der aus organischen und anorganischen Ionen-Verbindungen bestehenden Gruppe, ferner in einer Menge von 0,05 bis 10 Gewichtsteilen pro 100 Gewichtsteile des aromatischen Polyesterharzes enthalten ist.

**18.** Faser nach Anspruch 17, worin die organische ionische Verbindung aus der Gruppe der Sulfonate gemäß den Formeln (II) und (III) ausgewählt ist:

$$RSO_3M \qquad (II)$$

und

$$RSO_3PR^3R^4R^5R^6 \qquad (III)$$

worin R ein Mitglied repräsentiert, ausgewählt aus der aus Alkylgruppen mit 3 bis 30 Kohlenstoffatomen sowie Arylgruppen mit 7 bis 40 Kohlenstoffatomen bestehenden Gruppe, worin M ein Mitglied repräsentiert, ausgewählt

aus der aus Alkalimetallen und Erdalkalimetallen bestehenden Gruppe, und worin $R^3$, $R^4$, $R^5$ und $R^6$ jeweils und unabhängig voneinander ein Mitglied aus der aus Alkylgruppen und Arylgruppen bestehenden Gruppe repräsentiert.

## Revendications

1. Composition de résine de polyester aromatique comprenant un polyéther de type polyoxyéthylène insoluble dans l'eau, caractérisée en ce que la composition comprend

   a) 100 parties en masse d'une résine de polyester aromatique et
   b) 0,2 à 30 parties en masse dudit polyéther de type polyoxyéthylène insoluble dans l'eau comprenant au moins un élément choisi parmi les polymères représentés par la formule (I) :

   $$Z[(CH_2CH_2O)_l\text{-}(R^1O)_m\text{-}R^2]_k \qquad (I)$$

   dans laquelle Z représente un résidu d'un composé organique ayant 1 à 6 atomes d'hydrogène actif, $R^1$ représente un groupe alkylène non substitué ou substitué ayant au moins 6 atomes de carbone, $R^2$ représente un élément choisi parmi un atome d'hydrogène, les groupes hydrocarbonés monovalents ayant 1 à 40 atomes de carbone, les groupes hydrocarbonés hydroxylés monovalents ayant 2 à 40 atomes de carbone et les groupes acyles monovalents ayant 2 à 40 atomes de carbone, k représente un entier de 1 à 6, l représente un entier obéissant à la relation $l \geq 70/k$ et m est un entier de 1 ou plus.

2. Composition selon la revendication 1, dans laquelle la résine de polyester aromatique comprend au moins un élément choisi parmi le polyéthylènetéréphtalate, le polybutylènetéréphtalate, le polyhexylènetéréphtalate, le polyéthylènenaphtalate, le polybutylènenaphtalate, le 4,4'-dicarboxylate de polyéthylène-1,2-bis(phénoxy)éthane, un copolymère polyéthylène-isophtalate/téréphtalate, un copolymère polybutylène-téréphtalate/isophtalate et un copolymère polybutylène-téréphtalate/décane-dicarboxylate.

3. Composition selon la revendication 1 ou 2, dans laquelle la résine de polyester aromatique contient un composé de l'antimoine comme résidu de catalyseur de polycondensation en une quantité contrôlée de 30 ppm ou moins en termes d'atomes d'antimoine.

4. Composition selon l'une quelconque des revendications 1 à 3, dans laquelle le résidu de composé organique représenté par Z dans la formule (I) est choisi dans le groupe consistant en un résidu méthanol, un résidu propanol, un résidu éthanol, un résidu butanol, un résidu phénol, un résidu éthylèneglycol, un résidu propylèneglycol, un résidu butylèneglycol, un résidu butanediol, un résidu glycérol, un résidu triméthylolpropane, un résidu pentaérythritol, un résidu sorbitol, un résidu bisphénol A, un résidu diglycérol, un résidu triéthanolamine, un résidu éthylènediamine, un résidu hexaméthylènediamine et un résidu diéthylènetriamine.

5. Composition selon l'une quelconque des revendications 1 à 4, dans laquelle 1 dans la formule (I) obéit à la relation : $70/k \leq l \leq 2\,000/k$.

6. Composition selon l'une quelconque des revendications 1 à 5, dans laquelle m dans la formule (I) obéit à la relation : $1 \leq m \leq 0{,}3l$.

7. Composition selon l'une quelconque des revendications 1 à 6, dans laquelle le polyéther de type polyoxyéthylène insoluble dans l'eau comprend un polymère ayant au moins une unité oxyalkylène copolymérisé avec la chaîne principale de polyéther représentée par la formule (I) et ayant 3 à 5 atomes de carbone.

8. Composition selon l'une quelconque des revendications 1 à 7, comprenant en outre un antioxydant de type phosphite en une quantité de 0,02 à 3 parties en masse pour 100 parties en masse de la résine de polyester aromatique.

9. Composition selon la revendication 8, dans laquelle l'antioxydant de type phosphite comprend au moins un élément choisi dans le groupe consistant en le phosphite de triphényle, le phosphite de tris(2,4-di-t-butylphényle), le phosphite de tris(monononylphényle), le phosphite de tris(dinonylphényle), le phosphite de tris(mono- et dinonylphényle), le phosphite de diphénylmonooctyle, le phosphite de diphénylmonodécyle, le phosphite de didécylmonophényle, le phosphite de trisdécyle, le phosphite de trisisodécyle, le diphosphite de bis[dialkyle($C_{12}$-$C_{15}$)]bisphénol A, le diphosphite de distéarylpentaérythritol, le diphosphite de di(monononylphényl)pentaérythritol, le diphosphite

de di(tridécylphényl)pentaérythritol, le diphosphite de bis(2,6-di-t-butyl-4-méthylphényl)pentaérythritol, le 4,4'-butylidène-bis(3-méthyl-6-t-butylphényl-ditridécylphosphite, la 2,4,4'-butylidène-tris(3-méthyl-6-t-butylphényl-ditridécylphosphite et le tétrakis(2,4-di-t-butylphényl)-4,4'-bisphénylènephosphonite.

**10.** Composition selon l'une quelconque des revendications 1 à 9, comprenant en outre au moins un élément choisi dans le groupe consistant en les composés ioniques organiques et inorganiques en une quantité de 0,05 à 10 parties en masse pour 100 parties en masse de la résine de polyester aromatique.

**11.** Composition selon la revendication 10, dans laquelle le composé ionique organique est choisi dans le groupe consistant en les sulfonates représentés par les formules (II) et (III) :

$$RSO_3M \quad (II)$$

et

$$RSO_3PR^3R^4R^5R^6 \quad (III)$$

où R représente un élément choisi dans le groupe consistant en les groupes alkyles ayant 3 à 30 atomes de carbone et les groupes aryles ayant 7 à 40 atomes de carbone, M représente un élément choisi dans le groupe consistant en les métaux alcalins et les métaux alcalino-terreux, et $R^3$, $R^4$, $R^5$ et $R^6$ représentent respectivement et indépendamment les uns des autres un élément choisi dans le groupe consistant en les groupes alkyles et les groupes aryles.

**12.** Fibre de polyester aromatique hydrophile comprenant un polyéther de type polyoxyéthylène insoluble dans l'eau, caractérisée en ce que la fibre comprend

a) 100 parties en masse d'une résine de polyester aromatique et
b) 0,2 à 30 parties en masse dudit polyéther de type polyoxyéthylène insoluble dans l'eau comprenant au moins un élément choisi dans le groupe consistant en les polymères représentés par la formule (I):

$$Z[(CH_2CH_2O)_l-(R^1O)_m-R^2]k \quad (I)$$

dans laquelle Z représente un résidu d'un composé organique ayant 1 à 6 atomes d'hydrogène actif, $R^1$ représente un groupe alkylène non substitué ou substitué ayant au moins 6 atomes de carbone, $R^2$ représente un élément choisi dans le groupe consistant en un atome d'hydrogène, les groupes hydrocarbonés monovalents ayant 1 à 40 atomes de carbone, les groupes hydrocarbonés hydroxylés monovalents ayant 2 à 40 atomes de carbone et les groupes acyles monovalents ayant 2 à 40 atomes de carbone, k représente un entier de 1 à 6, 1 représente un entier obéissant à la relation $l \geq 70/k$ et m est un entier de 1 au moins.

**13.** Fibre obtenue en soumettant une fibre selon la revendication 12 à un traitement de réduction de masse avec une solution aqueuse d'un alcali ou d'une amine.

**14.** Fibre selon la revendication 13, dans laquelle la fibre de masse réduite a une absorption d'humidité d'au moins 3 % en masse à une température de 20°C et une humidité relative de 92 %.

**15.** Fibre selon l'une quelconque des revendications 12 à 14, dans laquelle la quantité de composé d'antimoine contenue comme résidu de catalyseur de polycondensation dans la résine de polyester aromatique est contrôlée à 30 ppm ou moins en termes d'atomes d'antimoine.

**16.** Fibre selon l'une quelconque des revendications 12 à 15, dans laquelle un antioxydant de type phosphite est compris en outre en une quantité de 0,02 à 3 parties en masse pour 100 parties en masse de la résine de polyester aromatique.

**17.** Fibre selon l'une quelconque des revendications 12 à 16, dans laquelle au moins un élément choisi dans le groupe consistant en les composés ioniques organiques et inorganiques est compris en outre en une quantité de 0,05 à 10 parties en masse pour 100 parties en masse de la résine de polyester aromatique.

**18.** Fibre selon la revendication 17, dans laquelle le composé ionique organique est choisi dans le groupe consistant en les sulfonates représentés par les formules (II) et (III) :

$$RSO_3M \quad (II)$$

et

$$RSO_3PR^3R^4R^5R^6 \qquad (III)$$

où R représente un élément choisi dans le groupe consistant en les groupes alkyles ayant 3 à 30 atomes de carbone et les groupes aryles ayant 7 à 40 atomes de carbone, M représente un élément choisi dans le groupe consistant en les métaux alcalins et les métaux alcaline-terreux, et $R^3$, $R^4$, $R^5$ et $R^6$ représentent respectivement et indépendamment les uns des autres un élément choisi dans le groupe consistant en les groupes alkyles et les groupes aryles.